# EUROPEAN PATENT SPECIFICATION

(11) **EP 3 389 335 B1**
(45) Date of publication and mention of the grant of the patent: **03.07.2019**
(21) Application number: 17741593.2
(22) Date of filing: 05.01.2017
(51) Int. Cl.: H04W 88/02, H04W 4/12, H04W 4/00, H04M 1/725, H04L 29/08

(54) **TERMINAL DEVICE, REMOTE CONTROL SYSTEM AND CONTROL METHOD**
ENDGERÄTEVORRICHTUNG, FERNSTEUERUNGSSYSTEM UND STEUERUNGSVERFAHREN
DISPOSITIF TERMINAL, SYSTÈME DE COMMANDE À DISTANCE, ET PROCÉDÉ DE COMMANDE

(30) Priority: 22.01.2016 KR 20160008212; 29.09.2016 KR 20160125584
(43) Date of publication of application: 17.10.2018
(73) Proprietor: Samsung Electronics Co., Ltd., Suwon-si, Gyeonggi-do 16677 (KR)
(72) Inventor: HAN, Jun-kyu, Suwon-si Gyeonggi-do 16569 (KR); PARK, Sung-jae, Suwon-si Gyeonggi-do 16538 (KR)
(74) Representative: Appleyard Lees IP LLP
(86) International application number: PCT/KR2017/000133
(87) International publication number: WO 2017/126827

(56) References cited:
- EP-A1- 2 800 406
- WO-A1-2013/094821
- KR-A- 20040 040 295
- KR-A- 20130 115 711
- KR-A- 20150 028 008
- KR-B1- 101 464 568
- US-A1- 2012 066 419

## Description

### TECHNICAL FIELD

The present disclosure relates to a terminal device, a remote control system, and a control method, and more particularly, to a terminal device for being remotely controlled, a remote control system, and a control method.

### BACKGROUND ART

Various devices have been developed according to the development of the electronic technology. A device performs an operation only when a user instruction is input thereto. Generally, a user enters an instruction by pressing a physical input button of the device. Alternatively, the device displays an input button on a display and the user touches the displayed input button to input the instruction. Then, the device performs an operation corresponding to the input user instruction. When a remote controller is developed, the user may input the instruction to the device from a certain distance by using the remote controller. Also, in recent years, with the development of wireless communication technology, a technology for controlling a device by using a terminal device at a long distance from the device has been developed. For example, a user who is not at home may turn on and off a boiler or a lamp in his/her house by using the terminal device.

However, the device is manually controlled according to a user's intention. Thus, individually controlling various devices is very inconvenient. Therefore, there is a need for a technology of actively controlling a device and collectively controlling a plurality of devices.

Patent publication EP 2 800 406 A1 discloses a mobile terminal including a wireless communication unit configured to receive a call single from at least one other terminal, in which the call single corresponds to at least one of a first call ID and a second call ID of the mobile terminal; and a controller configured to receive an event on the mobile terminal after the call single is received, transmit an event signal to an external terminal wirelessly connected with the mobile terminal using the corresponding first or second call ID to respond to the received event, and control the external terminal to display information on a display unit of the external terminal based on the event signal.

### DESCRIPTION OF EMBODIMENTS

### TECHNICAL PROBLEM

Provided are a terminal device for controlling a plurality of devices included in a remote control system through a terminal environment familiar to a user, the remote control system, and a control method.

### BRIEF DESCRIPTION OF DRAWINGS

FIGS. 1A and 1B are diagrams for explaining a remote control system according to an embodiment of the present disclosure.
FIG. 2A is a block diagram of a terminal device according to an embodiment of the present disclosure.
FIG. 2B is a block diagram of a terminal device according to another embodiment of the present disclosure.
FIG. 3 is a block diagram of a terminal device according to an embodiment of the present disclosure.
FIG. 4 is a diagram illustrating a screen displaying a plurality of terminal devices registered in the same account, according to an embodiment of the present disclosure.
FIG. 5 is a diagram for explaining a control screen of a terminal device according to a first embodiment of the present disclosure.
FIG. 6 is a diagram for explaining a control screen of a terminal device according to a second embodiment of the present disclosure.
FIG. 7 is a diagram for explaining an event profile according to an embodiment of the present disclosure.
FIG. 8 is a diagram illustrating a grouped event profile according to an embodiment of the present disclosure.
FIG. 9 is a diagram for explaining a control screen of a terminal device according to a third embodiment of the present disclosure.
FIG. 10 is a diagram for explaining a control screen of a terminal device according to a fourth embodiment of the present disclosure.
FIG. 11 is a timing diagram for explaining a control process according to a fifth embodiment of the present disclosure.
FIG. 12 is a diagram for explaining a control screen of a terminal device according to a fifth embodiment of the present disclosure.
FIG. 13 is a timing chart for explaining a control process according to a sixth embodiment of the present disclosure.
FIG. 14 is a diagram for explaining a control screen of a terminal device according to a sixth embodiment of the present disclosure.
FIG. 15 is a timing chart for explaining a control process according to a seventh embodiment of the present disclosure.
FIG. 16 is a diagram for explaining a control screen of a terminal device according to a seventh embodiment of the present disclosure.
FIG. 17 is a flowchart of a terminal device control method according to an embodiment of the present disclosure.
FIG. 18 is a flowchart illustrating a process of registering a terminal device, according to an embodiment of the present disclosure.
FIG. 19 is a flowchart illustrating a process of generating a chat room according to an embodiment of the present disclosure.
FIG. 20 is a diagram for explaining a process of performing a control job according to an embodiment of the present disclosure.
FIG. 21 is a diagram for explaining a process of correcting a registered terminal device, according to an embodiment of the present disclosure.
FIG. 22 is a block diagram of a terminal device according to another embodiment of the present disclosure.
FIG. 23 illustrates an example in which a terminal device is connected to external devices through QR codes, according to another embodiment of the present disclosure.
FIG. 24 illustrates a method of connecting a terminal device to external devices through QR codes, according to another embodiment of the present disclosure.
FIG. 25 shows an example in which a terminal device registers external devices in a contact, according to another embodiment of the present disclosure.

### BEST MODE

According to an aspect of the present disclosure, provided is a terminal device as set out in the accompanying claim 1.

The processor may be further configured to control the communicator to receive the message inquiring whether to perform the predetermined job corresponding to the predetermined event from the at least one second external device.

The processor may be further configured to control the communicator to automatically transmit an instruction to perform the predetermined job to the at least one second external device when whether to perform the predetermined job is not selected within a predetermined time.

The processor may be further configured to delete selected one device from the chat window upon receiving an instruction to select one of the at least one second external device displayed on the chat window.

The processor may be further configured to additionally display a third external device not displayed on the chat window on the chat window in response to an additional instruction.

The display may be further configured to display a message inquiring whether to perform at least one of a job related to the occurred predetermined event or a predetermined main job of the third external device on the chat window.

The terminal device may further include a memory configured to store the predetermined event and an event profile in which the at least one second external device related to the predetermined event is set.

The at least one second external device may be a device registered in a same user account.

According to another aspect of the present disclosure, provided is a method of controlling a terminal device as set out in the accompanying claim 9. The method may further include connecting the terminal device to the at least one second external device related to the predetermined event; and receiving the message inquiring whether to perform the predetermined job corresponding to the predetermined event from the at least one second external device.

The method may further include automatically transmitting an instruction to perform the predetermined job to the at least one second external device when whether to perform the predetermined job is not selected within a predetermined time.

The method may further include removing selected one device from the chat window upon receiving an instruction to select one of the at least one second external device displayed on the chat window.

The method may further include additionally displaying a third external device not displayed on the chat window on the chat window in response to an additional instruction.

The method may further include displaying a message inquiring whether to perform at least one of a job related to the occurred predetermined event or a predetermined main job of the third external device on the chat window.

The at least one second external device may be a device registered in a same user account.

According to another aspect of the present disclosure, provided is a remote control system as set out in the accompanying claim 14. The terminal device may be configured to automatically transmit an instruction to perform the predetermined job to the at least one second external device when whether to perform the predetermined job is not selected within a predetermined.

### MODE OF DISCLOSURE

Hereinafter, embodiments of the present disclosure will be described in detail with reference to the accompanying drawings. The embodiments described herein may be variously modified. Specific embodiments are described in the drawings and may be described in detail in the detailed description. It should be understood, however, that the specific embodiments disclosed in the accompanying drawings are only intended to facilitate an understanding of the various embodiments of the present disclosure. Therefore, it is to be understood that the technical idea of the present disclosure is not limited by the specific embodiments disclosed in the accompanying drawings, but the present disclosure should be understood to include all equivalents or alternatives included in the technical scope of the present disclosure. In the following description of the present disclosure, the detailed description of known functions and configurations incorporated herein will be omitted when it may make the subject matter of the present disclosure rather unclear.

Terms including ordinals, such as first, second, etc., may be used to describe various elements, but such elements are not limited to the above terms. The above terms are used only for the purpose of distinguishing one component from another.

In this specification, the terms "comprises" or "having" and the like are used to specify that a feature, a number, a step, an operation, an element, a component, or a combination thereof, but do not preclude the presence or addition of one or more other features, integers, steps, operations, components, parts, or combinations thereof. It is to be understood that when an element is referred to as being "connected" or "coupled" to another element, it may be directly connected or coupled to the other element, but other elements may be present in between. Meanwhile, when an element is referred to as being "directly connected" or "directly coupled" to another element, it should be understood that there are no other elements in between.

A "module" or a "part" for elements used in the present specification performs at least one function or operation. Also, the "module" or the "part" may perform functions or operations by hardware, software, or a combination of hardware and software. Also, a plurality of "modules" or a plurality of "parts", other than a "module" or a "part" that is to be performed in specific hardware or performed in at least one processor, may be integrated into at least one module.

The singular forms "a," "an," and "the" include plural expressions unless the context clearly dictates otherwise.

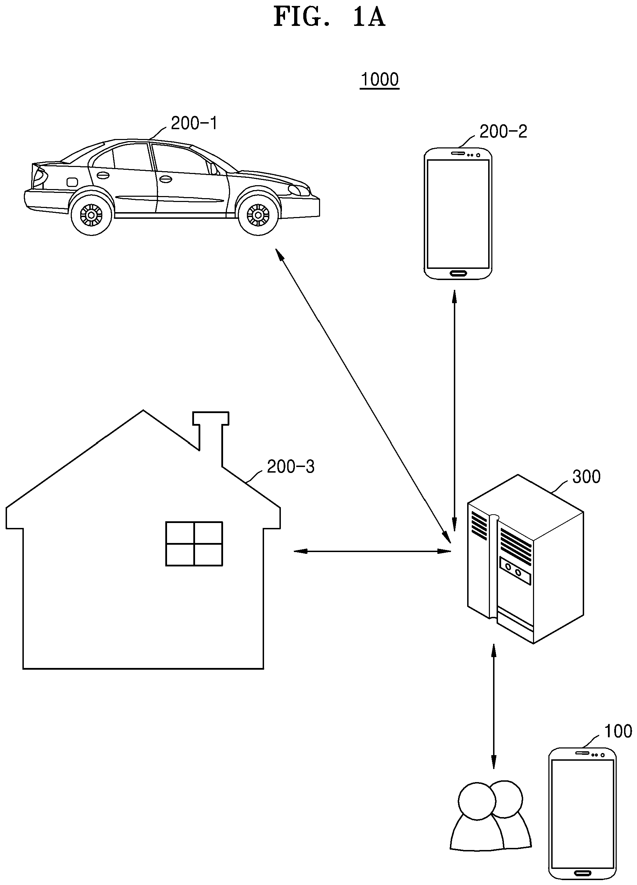

FIG. 1A is a diagram illustrating a remote control system 1000 according to an embodiment of the present disclosure.

Referring to FIG. 1A, the remote control system 1000 may include a terminal device 100, a plurality of external devices 200-1, 200-2, and 200-3, and a server 300. Although the remote control system 1000 shown in FIG. 1A includes the plurality of external devices 200-1, 200-2, and 200-3, the remote control system 1000 may include one external device.

In an embodiment, the terminal device 100 may receive an instruction input by a user and transmit the input instruction to the at least one external device 200-1, 200-2, and/or 200-3 related to the instruction input through the server 300. The terminal device 100 may receive the user instruction and generate a chat window for displaying an external device related to the input instruction. The chat window is a region in which the user may input the instruction, a space for interacting with the external device, and a history region recording whether to transmit the instruction and perform an operation. The terminal device 100 may store an event profile including an external device list related to the input instruction. The event profile is a descriptor that sets identification information of the external device according to a generated event and a job to be performed by the external device. The event profile may be referred to as an action descriptor.

The terminal device 100 may determine the external device related to the instruction input to the terminal device 100 based on the event profile (or the action descriptor). Accordingly, when the user instruction is input, the terminal device 100 may display the external device related to the user instruction in the chat window based on the stored event profile.

Alternatively, the event profile may be stored in the server 300. In this case, when the instruction is input, the terminal device 100 may receive the event profile stored in the server 300 and determine the external device related to the user instruction.

In an embodiment, the terminal device 100 may generate the chat window and display the identification information of the external device related to the user instruction input to the terminal device 100. Also, the terminal device 100 may request state information from or may transmit operation performing signals to the external devices 200-1, 200-2, and 200-3 through the server 300. The state information may be information about current states of the external devices 200-1, 200-2, and 200-3. The operation performing signals may be signals related to operations of the external devices 200-1, 200-2, and 200-3 corresponding to the input instruction. The external devices 200-1, 200-2, and 200-3 may transmit messages inquiring whether to perform the operations corresponding to the input instruction to the terminal device 100 through the server 300. The terminal device 100 may display the received message in the chat window. When the terminal device 100 receives an approval instruction from the user or does not receive any input for more than a predetermined time, the terminal device 100 may transmit operation performing instruction signals to the external devices 200-1, 200-2, and 200-3 through the server 300. Alternatively, the terminal device 100 may receive an event occurrence signal from one of the plurality of external devices 200-1, 200-2, and 200-3. Even when the terminal device 100 receives the event occurrence signal from one external device, the terminal device 100 may perform the same process as in the embodiment when the user instruction is input.

One of the plurality of external devices 200-1, 200-2, and 200-3 may perform a function of the terminal device 100. Also, the terminal device 100 may operate as one of the external devices 200-1, 200-2, and 200-3.

Each of the external devices 200-1, 200-2, and 200-3 may be one independent device, and may be an annexed part installed in a service space to manage or control the service space. In an embodiment, the terminal device 100 or each of the external devices 200-1, 200-2 and 200-3 may be implemented as an independent device such as a mobile phone, a smart phone, a notebook computer, a desktop computer, a personal digital assistant (PDA), a portable multimedia player (PMP), a navigation device, a tablet PC, a wearable device, a TV, a refrigerator, a washing machine, a monitor, a DVD player, a smart phone, a digital camera, an electronic photo frame, a kiosk, etc. Each of the external devices 200-1, 200-2, and 200-3 may be implemented as a lighting related device such as a lamp, a blind, and an illumination sensor, a heating device such as an air conditioner, a heater, a boiler, and a temperature sensor, an air-related device such as an air purifier, a humidifier, or the like. Further, each of the external devices 200-1, 200-2, and 200-3 may be the annexed part installed in the service space such as a car, a house, an office, an automobile garage, a mart, and the like. That is, each of the external devices 200-1, 200-2, and 200-3 may be implemented as a server managing the office, the mart, and the like, or may be implemented as a car control module included in the car. That is, the external devices 200-1, 200-2, and 200-3 may include all devices or annexed modules capable of transmitting the state information and the operation inquiry message to the terminal device 100, receiving the instruction from the terminal device 100, and performing the received instruction. The external devices 200-1, 200-2, and 200-3 may perform operations according to the transmitted instruction.

The server 300 may receive the state information or the message inquiring whether to perform the operation from the external devices 200-1, 200-2, and 200-3, and may transmit the message to the terminal device 100. The server 300 may receive the instruction from the terminal device 100 and transmit the instruction to the relevant external device. In some cases, the server 300 may store an account of the terminal device 100 and register an external device registered by the user in the stored account to generate the event profile. The server 300 may share the event profile of the user with other users according to a permission of the user. Meanwhile, the server 300 may not be used in a control operation process.

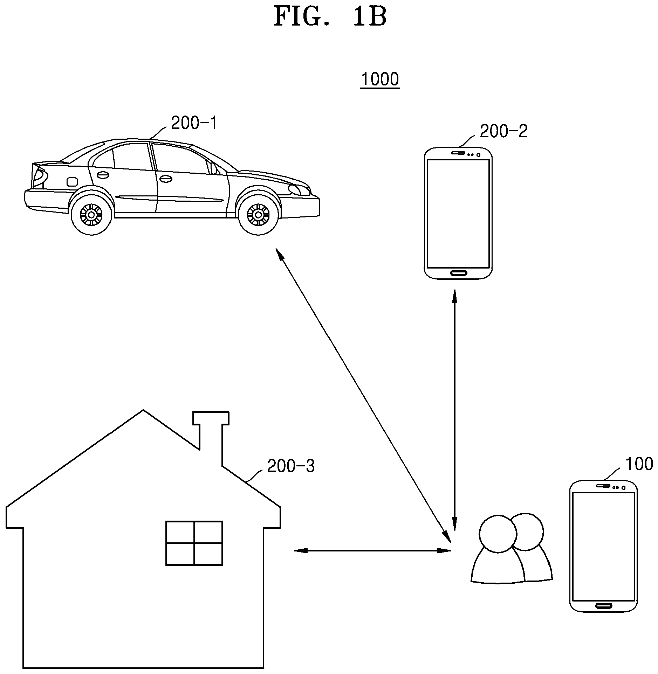

FIG. 1B is a diagram for explaining a remote control system 1000a according to another embodiment of the present disclosure.

Referring to FIG. 1B, the remote control system 1000a may include the terminal device 100 and the external devices 200-1, 200-2, and 200-3. The terminal device 100 may receive a user instruction or receive an event occurrence signal from one of the plurality of external devices 200-1, 200-2, and 200-3. The terminal device 100 may generate a chat window according to the input instruction or the received event occurrence signal, and may display an external device related to the input instruction or the received event occurrence signal. The terminal device 100 may determine the external device related to the event based on an event profile. The event profile may be stored in the terminal device 100 or a server (not shown). In an embodiment, when the chat window is generated, the terminal device 100 may receive the event profile or data included in the event profile from the server and may directly communicate with the external device.

The external devices 200-1, 200-2, and 200-3 may transmit a message inquiring whether to perform an operation corresponding to the user instruction or an occurred event to the terminal device 100. In an embodiment, the terminal device 100 may be connected to an external device irrelevant to the user instruction or the occurred event. The external device connected to the terminal device 100 may transmit a message inquiring whether to perform a main operation or a predetermined operation to the terminal device 100. In an embodiment, when a home appliance event profile excludes a living room light, the user may add the living room light to the chat window based on a user's intention after executing a home appliance event profile. Since the living room light is excluded from the home appliance event profile, the home appliance event profile may not include an operation setting corresponding to the living room light. Accordingly, the living room light may transmit a message inquiring whether to perform a main operation (e.g., a turn-on operation) of the living room light to the terminal device 100. An operation of the remote control system 1000a is the same as that described with reference to FIG. 1A, and therefore, a detailed description thereof will be omitted. Hereinafter, a block diagram of the terminal device 100 will be described.

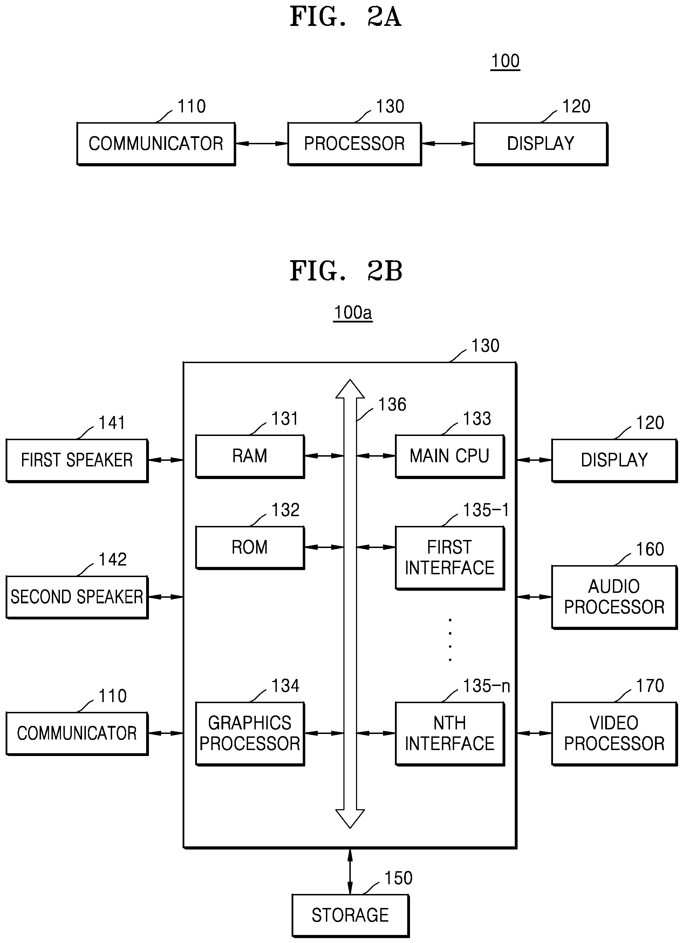

FIG. 2A is a block diagram of the terminal device 100 according to an embodiment of the present disclosure.

Referring to FIG. 2A, the terminal device 100 may include a communicator 110, a display 120, and a processor 130. The communicator 110 communicates with a plurality of external devices. The communicator 110 may receive an event occurrence signal from an external device in which an event has occurred. The communicator 110 may receive a message inquiring whether to perform a predetermined job corresponding to the event from the external device related to the event.

The communicator 110 may transmit and receive wireless signals to and from a base station, an external terminal, and a server based on a communication method for mobile communication including a mobile communication module (not shown). The wireless signals may include various types of data such as voice, image, text, or multimedia data. Alternatively, the communicator 110 may transmit and receive a wireless signal over a communication network according to wireless Internet technologies, including a wireless Internet module (not shown). Meanwhile, a wireless Internet module that performs wireless Internet access through a mobile communication network may be understood as a kind of mobile communication module. Alternatively, the communicator 110 may include a short-range communication module (not shown) for short-range communication. The short-range communication module may perform communication with a wireless communication system, another terminal device, an external device, a server, or the like using a short-range wireless communication network.

The display 120 may generate and display a chat window to display the external device related to the event in the chat window. The display 120 may display the message inquiring whether to perform the predetermined job corresponding to the event from the external device and a graphic user interface (GUI) (for example, a button image) for selecting whether to perform the predetermined job on the chat window.

The processor 130 may control the communicator 110 and the display 120. When an event occurrence signal is received through the communicator 110, the processor 130 may control the communicator 110 to connect the terminal device 100 to the external device related to the event, according to the event profile. The processor 130 then may generate a chat window and control the display 120 to display the external device related to the event and a message received from the external device in the chat window. Also, the processor 130 may control the display 120 to display a button for the external device to select whether to perform the predetermined job. The processor 130 may display an input user instruction on the chat window when the user instruction is input. The processor 130 may control the communicator 11 to transmit the input user instruction (e.g., an instruction to perform the predetermined job) to the external device related to the event. The processor 130 may display the button for the external device to select whether to perform the predetermined job, and when the user instruction is not input for a predetermined period of time, may automatically transmit the instruction to perform the predetermined job to the external device.

FIG. 2B is a block diagram of a terminal device 100a according to another embodiment of the present disclosure.

FIG. 2B is a block diagram showing a detailed configuration of the terminal device 100 shown in FIG. 2A. In FIG. 2B, the terminal device 100a may include the communicator 110, the display 120, the processor 130, a first speaker 141, a second speaker 142, a storage 150, an audio processor160, a video processor 170, and the like. Detailed descriptions of redundant configurations between FIGS. 2A and 2B will be omitted.

The display 120 displays various UI screens. The UI screens may be implemented in various forms such as images, moving images, text, and the like. Meanwhile, the display 120 may be implemented as an LCD (Liquid Crystal Display Panel), an OLED (Organic Light Emitting Diodes), or the like, but is not limited thereto. Also, the display 120 may be implemented as a flexible display, a transparent display, or the like as the case may be.

The processor 130 controls the overall operation of the terminal device 100a.

Specifically, the processor 130 includes a RAM 131, a ROM 132, a main CPU 133, a graphics processor 134, first through nth interfaces 135-1 through 135-n, and a bus 136.

The RAM 131, the ROM 132, the main CPU 133, the graphics processor 134, the first to nth interfaces 135-1 to 135-n, etc. may be connected to each other via the bus 136.

The first to nth interfaces 135-1 to 135-n are connected to the various elements described above. One of the first to nth interfaces 135-1 to 135-n may be a network interface connected to an external device via a network.

The main CPU 133 accesses the storage 150 and performs booting using an O/S stored in the storage 150. Then, the main CPU 133 performs various operations using various programs, contents, data, and the like that are stored in the storage 150.

The ROM 132 stores an instruction set for booting the system and the like. When a turn-on instruction is input and power is supplied, the main CPU 133 copies the O/S stored in the storage 150 to the RAM 131 according to an instruction stored in the ROM 132 and executes the O/S to boot the system. When booting is completed, the main CPU 133 copies various application programs stored in the storage 150 to the RAM 131 and executes the application programs copied to the RAM 131 to perform various operations.

The graphic processor 134 generates a screen including various objects such as an icon, an image, and text, for example, a screen including a pointing object, using a calculator (not shown) and a renderer (not shown). The calculator (not shown) calculates attribute values such as a coordinate value, a shape, a size, and a color to display each object according to a layout of the screen based on a received control instruction. The renderer (not shown) generates screens of various layouts including objects based on the attribute values calculated by the calculator (not shown). The screens generated by the renderer (not shown) are displayed in a user interface region of the display 120.

Meanwhile, the operation of the processor 130 described above may be performed by a program stored in the storage 150. The storage 150 stores an O/S software module for driving the terminal device 100a and various data such as various multimedia contents. In particular, the storage 150 may store programs such as a communication module and a signal processing module for providing functions according to an embodiment of the present disclosure. The processor 130 may receive a signal from an external device using the communication module and transmit the signal to the external device.

Meanwhile, the terminal device 100a may further include an input unit (not shown) for receiving a user instruction. For example, the input unit may be implemented in the form of a keypad, a keyboard, a mouse, a touch pad, a touch screen, a microphone, a camera, or the like.

In addition, the terminal device 100a may include an audio processor 160 performing processing on audio data, and a video processor 170 for performing processing on video data. For example, the processor 130 may convert a received message or a displayed message into voice. The processor 130 may control the audio processor 160 to process audio signals output through the first and second speakers 141 and 142. Alternatively, the user may input an instruction to the terminal device 100a by voice. The audio processor 160 processes the input audio signals. The processor 130 converts the input audio signals into binary data to recognize the input instruction.

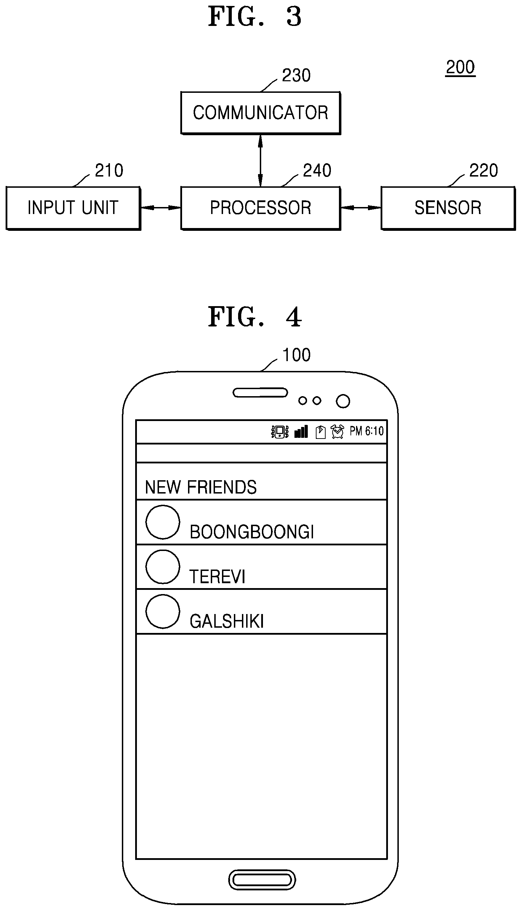

FIG. 3 is a block diagram of a terminal device 200 according to an embodiment of the present disclosure.

As described above, a remote control system includes the terminal device 200 that communicates with an external device, a first external device that transmits an event occurrence signal to the terminal device 200, and a second external device that performs an operation corresponding to an event in response to an instruction provided from the terminal device 200. However, the present disclosure is not limited thereto, and the first external device and/or the second external device of the remote control system may perform a function of the terminal device 200, and the terminal device 200may perform functions of the first external device and/or the second external device. In the meantime, for convenience of explanation, the second external device is described separately from the first external device according to a function of an external device, but the first and second external devices may be one device.

The terminal device 200 shown in FIG. 3 may perform the functions of the first external device and/or the second external device. In this case, as shown in FIG. 3, the terminal device 200 includes an input unit 210, a sensor 220, a communicator 230, and a processor 240.

When the terminal device 200 performs the function of the first external device that transmits the event occurrence signal, the input unit 210 and the sensor 220 may receive the event occurrence signal. For example, the terminal device 200 may directly recognize the event occurrence signal through the sensor 220. Alternatively, the terminal device 200 may receive an externally sensed event occurrence signal through the input unit 210. As described above, the terminal device 200 may be implemented in the form of a server managing and controlling an independent electronic device, a sensor device or a system of a building, a control module of the building or a car, etc. Accordingly, the terminal device 200 may receive the event occurrence signal through the input unit 210 or may sense the event occurrence signal through the sensor 220. Meanwhile, the terminal device 200 may include only one module of the input unit 210 or the sensor 220.

Meanwhile, when the terminal device 200 further performs the function of the second external device performing a predetermined job, the sensor 220 may detect state information. At this time, the terminal device 200 may determine a current state before performing an operation. For example, when the terminal device 200 is a boiler, the terminal device 200 may determine whether to turn on an operation of the boiler by sensing a current temperature. Further, even when the terminal device 200 performs the predetermined job, since the terminal device 200 may function as the first external device transmitting an instruction, the input unit 210 may receive a user instruction.

The communicator 230 may transmit the event occurrence signal to a main device (e.g., the terminal device 100 of the remote control system 1000 of FIG. 1A). Also, the communicator 230 may receive the user instruction from the main device or transmit the state information to the main device. The processor 240 may control the communicator 230 to transmit the event occurrence signal to the main device when an event occurs in the terminal device 200. The processor 240 may perform an operation corresponding to the event when the event occurs. Alternatively, the processor 240 may transmit, to the main device, a message inquiring whether to perform an operation corresponding to the event when the event occurs. Then, the processor 240 may perform the operation corresponding to the event by receiving the user instruction from the main device.

FIG. 4 is a diagram illustrating a screen displaying a plurality of terminal devices registered in the same account according to an embodiment of the present disclosure.

Referring to FIG. 4, a main device (for example, the terminal device 100 of the remote control system 1000 of FIG. 1A) may display identification information of the plurality of terminal devices (for example, the plurality of external devices 200-1, 200-2, and 200-3 of the remote control system 1000 of FIG. 1A) connected to the main device (or a server). Each terminal device may be registered in an account created by a user of the main device. The terminal devices registered in the same account may be registered as friends in a predetermined messenger application that may be executed in the main device or the terminal devices. When the messenger application is executed, the plurality of terminal devices registered as the friends may be displayed in list types including identification information of each terminal device. The identification information of each terminal device may be registered as a nickname according to a user selection when each terminal device is registered in the account. Meanwhile, when the identification information of each terminal device is not registered as the nickname, the identification information of each terminal device may be registered as a unique identification number (for example, a MAC address of each terminal device or the like) or an identification name (for example, a type of each terminal device, etc.)

In an embodiment, when registering a car as a first account of a user, the user may register identification information of the car as a nickname of 'Boongboongi', when registering a TV as the first account, register identification information of the TV as a nickname 'Terevi', and when registering a smart phone as the same first account, register identification information of the smart phone as a nickname 'Gaelshiki'. Meanwhile, the car, the TV and the smart phone registered in the same first account may be automatically registered as friends in the messenger application. When the messenger application of the main device is executed, the main device may display the identification information of the terminal device registered as the nickname in the first account of the user while displaying a friend list. When a messenger application installed in each of the plurality of terminal devices is executed, it will be easily understood by one of ordinary skill in the art that each terminal device may display the friend list including the nicknames of the terminal devices registered in the first account.

Meanwhile, the main device may display an inquiry message as to whether to perform an operation corresponding to an event occurred in a predetermined terminal device through an instant messenger chat with the terminal devices registered in the same account as the main device, and transmit an operation instruction to the predetermined terminal device.

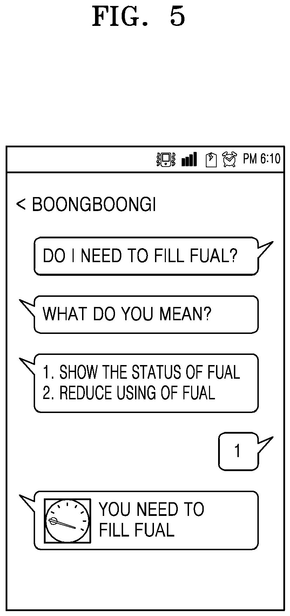

FIG. 5 is a diagram for explaining a control screen of a terminal device according to a first embodiment of the present disclosure.

Referring to FIG. 5, the terminal device (for example, a main device or a terminal device in which a messenger application of FIG. 4 is installed) in which a chat window is generated according to a user instruction is shown. In addition to receiving an event occurrence signal, the terminal device may receive the user instruction and transmit the instruction to an external device.

When a messenger application is executed, the terminal device may display an identification information list of the external device registered in the same account. The terminal device may generate the chat window including an external device selected by a user. At this time, the terminal device may select a plurality of external devices. The user may enter a message in the chat window. The terminal device may receive a message from the user via a physical key such as a keypad, a keyboard, or a soft key displayed on a display. Alternatively, the terminal device may receive the message through a handwriting input of the user on a certain region of the display. The terminal device may display the input message on the chat window. Alternatively, the terminal device may receive a user voice through a microphone and display the message on the chat window. The terminal device may transmit the input message to a selected external device.

In an embodiment, the terminal device transmits the message to a server, and after receiving the message, the server may determine information of the chat window and the external device and transmit the message to the selected external device. The external device that has received the message may analyze the message. For example, the external device may extract a predetermined operation performing instruction from the message. Alternatively, the external device may extract a state information providing request of the external device from the message. In another embodiment, the terminal device may be directly connected to the selected external device and directly transmit the message to the selected external device. The external device that has received the message may analyze the message. Meanwhile, the external device may perform a predetermined operation based on a message analysis result, or may transmit state information of the external device to the server (or the terminal device).

As shown in FIG. 5, according to a user selection, the terminal device may generate a chat window and display a car having a nickname 'Boongboongi' on the chat window. The user may input a message related to the car through the chat window. In an embodiment, the message related to the car may be a message inquiring about a fuel. The terminal device may transmit the input message to the car. As described above, the message may be transmitted to the car through the server or directly.

The car may receive and analyze the message. The car may extract a predetermined word or sentence corresponding to the operation performing instruction or the state information providing request from the message. When the car clearly recognizes the operation performing instruction or the state information providing request from the message, the car may perform a corresponding operation or transmit a response message. However, when the operation performing instruction or the state information providing request is not extracted from the message, the car may transmit a message requesting re-inquiry to the terminal device. In this case, the car may transmit an operation item that the car may perform together with the message received from the terminal device. For example, when the message received from the terminal device includes a word 'fuel', the car may transmit the operation item such as providing fuel state information of the car, performing an eco mode, etc. to the terminal device. That is, the car may increase a possibility of performing the user instruction quickly and clearly by transmitting the operation item.

Meanwhile, the terminal device may display the message (e.g., "What do you mean?") corresponding to a re-inquiry request received from the car on the chat window. Also, when there is the operation item received from the car, the terminal device may display a message indicating the received operation item on the chat window. The user may select one of a plurality of operation items. The terminal device may transmit information about the selected item to the car.

The car may perform an operation corresponding to the transmitted instruction and transmit a result message to the terminal device. For example, the car may receive a message requesting the fuel state information from the terminal device, and may transmit a message including an image, text, etc. indicating a fuel state of the car to the terminal device. The terminal device may display the message received from the car. As described with reference to FIG. 5, the external device may perform an instruction through interaction with the user, rather than performing an operation by a user's unilateral instruction.

Meanwhile, the terminal device may generate a chat window and control the external device when an event occurrence signal is received from the external device.

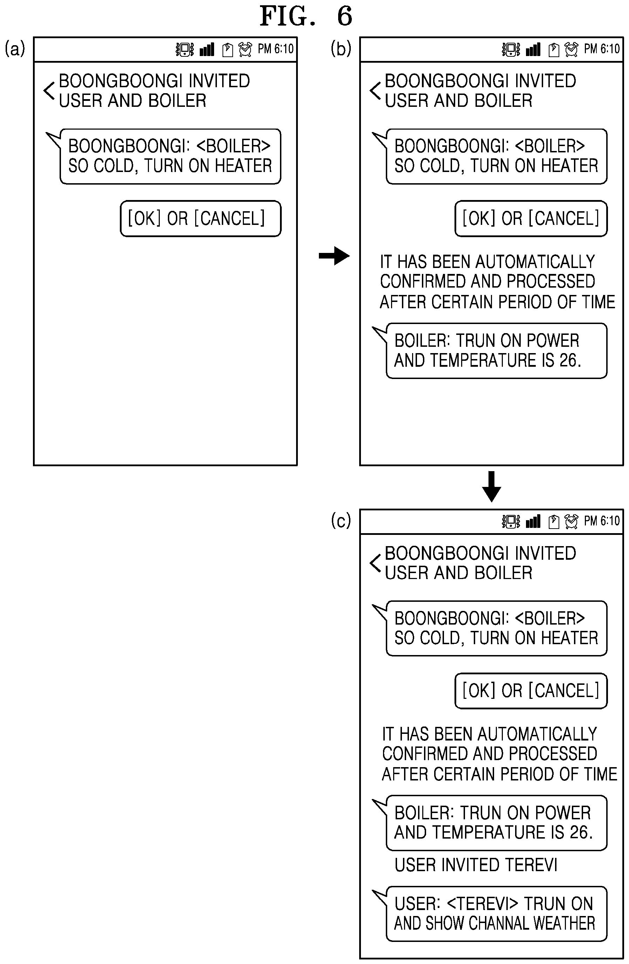

FIG. 6 is a diagram for explaining a control screen of a terminal device according to a second embodiment of the present disclosure.

Referring to FIG. 6A, a screen on which the terminal device generates a chat window and invites an external device is shown. Upon receipt of an event occurrence signal, the terminal device may generate the chat window and display the external device related to an occurred event on the chat window.

In an embodiment, when the event occurrence signal is received, the terminal device may display the external device related to the event on the chat window based on an event profile. As described above, the event profile may refer to a profile in which an event, an external device corresponding to the event, and an operation of the external device are set. The event profile may be referred to as an action descriptor. The event profile may be generated when the terminal device is manufactured and stored in the terminal device. Alternatively, the event profile may be stored in a server. The event profile may be generated, deleted, and edited by a user. The event profile may include a plurality of external devices.

When the terminal device stores the event profile, the terminal device may generate the chat window before being connected to the external device and display identification information of the external device on the chat window. When the terminal receives an initial message through the chat window and receives a message transmission instruction, the terminal device may be connected to the external device to transmit the message. Alternatively, the terminal device may perform a connection operation with the external device when the chat window is generated.

Meanwhile, the event occurrence signal received by the terminal device may vary, and the terminal device may select the external device related to the event based on the event profile and the event occurrence signal. In an embodiment, when a car determines that an external temperature is low, the car may transmit the event occurrence signal to the terminal device. In this case, the terminal device may select a home boiler as an external device related to an external temperature event using the event profile. Alternatively, the car may transmit the event occurrence signal to the terminal device when an event to leave for home occurs. In this case, the terminal device may use the event profile to select the boiler as an external device related to the event to leave for home. The event profile may set a temperature check operation as an operation of the boiler.

For example, the car may receive a voice instruction to leave for a user's home and determine a destination. Alternatively, the car may determine the destination based on destination information input to a navigation device. Alternatively, the car may inquire the user and receive a response from the user to determine the destination. The car may determine the event to leave for home after determining the destination. The car may transmit a signal of occurrence of the event to leave for home by the terminal device.

The terminal device may receive the event occurrence signal from the car, generate the chat window, and invite the car and the boiler of home based on the event profile. Alternatively, all terminal devices included in the same account may share the event profile. Accordingly, the car may transmit the event occurrence signal to the terminal device, request the terminal device to generate the chat window, and then invite the boiler. The terminal device may transmit the operation performing instruction to the boiler using an operation of the boiler predetermined in the event profile. The boiler may receive the operation performing instruction from the terminal device to perform the predetermined operation. For example, the boiler may perform an operation of checking a current temperature as the predetermined operation. When the boiler determines that the current temperature is low, the boiler may transmit a message to the terminal device inquiring whether to raise the temperature.

Alternatively, the terminal device may invite the boiler after generating the chat window according to the event occurrence signal of the vehicle. The boiler may perform an operation according to an instruction received from the terminal device, and may transmit a message related to an operation performing result to the terminal device. In this case, the terminal device may display the transmitted message on the chat window. When the message transmitted by the boiler is a message for inquiring the user, the terminal device may display a button for selecting whether to perform the operation together.

Referring to FIG. 6B, a terminal device that automatically transmits a turn-on instruction to a boiler is shown. The user may input an instruction to confirm or cancel a message inquiring about whether the boiler performs a job. The terminal device may transmit a user instruction to the boiler, and the boiler may perform the turn-on operation according to the user instruction.

However, when the instruction is not input from the user for more than a predetermined time, the terminal device may transmit an operation performing instruction to the boiler. The boiler may perform the operation according to the transmitted instruction. Alternatively, the external device may automatically perform the operation when not receiving the instruction for more than the predetermined time. Then, the external device may transmit a message (e.g., 'turned on' & 'set temperature 26 degrees', etc.) related to a result of performing the operation to the terminal device. The terminal device may display the message received from the external device.

Referring to FIG. 6C, a terminal device to which a new external device is added is shown. The terminal device and an external device may generate a chat window according to a predetermined event profile, chat, and perform predetermined operations. However, the user may instruct an operation to the new external device (i.e., an external device that corresponds to an event and is not preset) that is not preset in an event profile through the chat window. The terminal device may display a list of external devices registered in the same account as the terminal device according to a user instruction while the chat window is currently displayed. The terminal device may select the new external device according to a user selection. The terminal device may invite the new external device to the current chat window. That is, the terminal device may display the new external device by adding the new external device that is not displayed on the chat window to the chat window according to a user addition instruction.

The added external device may transmit a message inquiring whether to perform a related operation by referring to a current event. Alternatively, the added external device may transmit a message inquiring whether to perform its main operation regardless of the event. In this case, the terminal device may transmit an instruction to perform a job to the added external device. Alternatively, when the external device is added, the terminal device may transmit an instruction to perform a specific job to the added external device. The added external device may perform an operation by receiving the instruction from the terminal device.

Meanwhile, messages transmitted/received to/from the external device through the chat window may be continuously displayed or stored. Accordingly, the user may confirm the messages or job contents in the future.

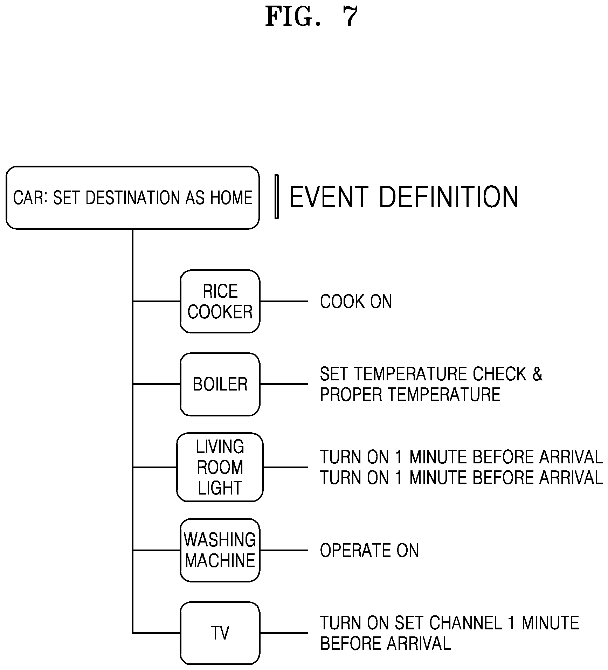

FIG. 7 is a diagram for explaining an event profile according to an embodiment of the present disclosure.

Referring to FIG. 7, the event profile including events, external devices, and jobs is shown. The event profile may be generated and stored when a terminal device is manufactured. Alternatively, the event profile may be generated or edited by a user.

In an embodiment, an event selected as home that is a destination may be set in a car. An external device related to the event of the home that is the destination may include a rice cooker, a boiler, a living room light, a washing machine, and a TV. When the event occurs, it may be set that the rice cooker turns on a cooking function, the boiler checks a temperature and sets a predetermined temperature, the living room light turns on 1 minute before arrival, the washing machine turns on a washing function, and the TV does a job of selecting a channel set 1 minute before arrival. The event profile may be stored in each terminal device and stored in a server. The event profile may also be shared with terminal devices.

When the event selected as the home that is the destination occurs in the car after the event profile is set, the car may transmit an event occurrence signal to the terminal device. The terminal device may generate a chat window according to the received event occurrence signal and invite external devices related to the occurred event (e.g., the rice cooker, the boiler, the living room light, the washing machine, the TV, etc.). Alternatively, the car may transmit the event occurrence signal to the terminal device, and when the terminal device generates a chat window, invite the related external devices. Accordingly, the terminal device may actively generate the chat window and perform a related job according to the event profile. Meanwhile, event profiles may be grouped in detail.

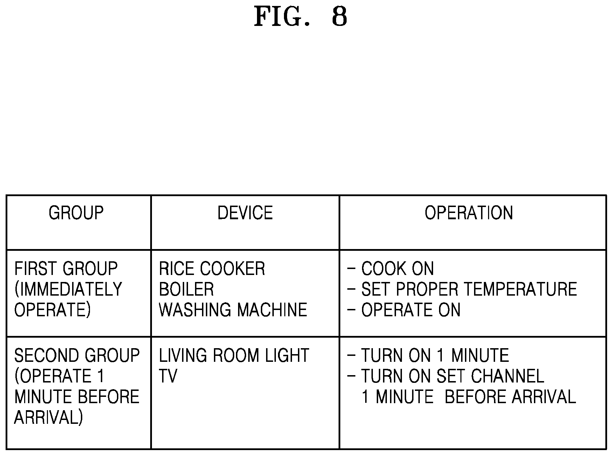

FIG. 8 is a diagram illustrating a grouped event profile according to an embodiment of the present disclosure.

Referring to FIG. 8, the event profile in which external devices are grouped in detail is shown. As described above, when an event occurs, a terminal device may invite a plurality of external devices to a chat window and transmit job instructions. When the plurality of external devices are included in the chat window, the terminal device may transmit an operation performing instruction to some of the plurality of external devices according to a user input. However, when the terminal device transmits the operation performing instruction only to some external devices, a user of the terminal device selects (or deselects) each external device, which may cause user inconvenience. Accordingly, when the external devices included in the event profile are grouped temporally or spatially, the terminal device may transmit the operation performing instruction to only some of the external devices without requiring the user input.

As shown in FIG. 8, the event profile may group the external devices based on an operation performing time of each external device. For example, external devices (e.g., a rice cooker, a boiler, or a washing machine) included in a first group may perform operations immediately when an event occurs. Then, external devices (for example, a living room lamp and a TV) included in a second group may perform operations at a predetermined time (for example, 1 minute before the car arrives). When the terminal device receives an event occurrence signal, the terminal device may first invite the rice cooker, the boiler, and the washing machine to the chat window, and may perform or cancel an operation according to a user instruction. The terminal (or the car) may additionally invite the living room lamp and the TV to the chat window 1 minute before the car arrives at the house, and perform or cancel the operation according to the user instruction.

In an embodiment, event profiles may be classified based on operating time. For example, event profiles may be classified as a group that performs a job immediately after an event occurs, a group that performs a job within an hour after the event occurs, or a group that performs a job within an hour before the user arrives home. Alternatively, the event profiles may be classified based on a distance between the terminal device (or an event occurrence device) and the external device. For example, the event profiles may be classified into a job performing group when the distance from the event occurrence device or the terminal device is within 1 km, a job performing group when the distance is 10 km or more, and the like.

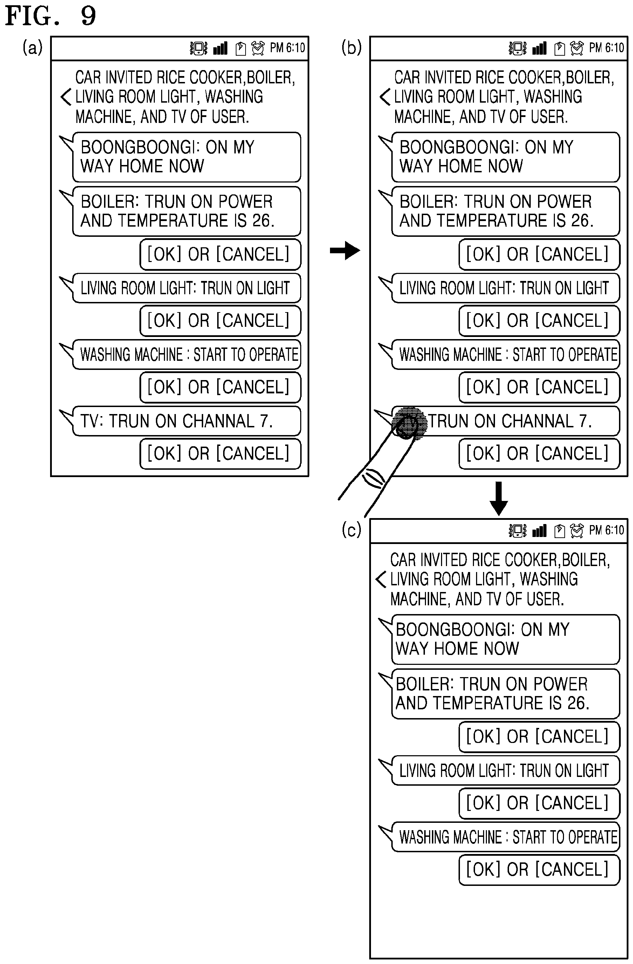

FIG. 9 is a diagram for explaining a control screen of a terminal device according to a third embodiment of the present disclosure.

Referring to FIG. 9A, the terminal device in which a plurality of external devices are displayed on a chat window is shown. As described above, when an event occurs, an event occurrence device (i.e., an external device in which the event occurs) may transmit an event occurrence signal to the terminal device. The event occurrence device may invite an external device related to the event to the chat window based on an event profile. Alternatively, the terminal device may generate the chat window upon receiving the event occurrence signal. Then, the terminal device may display the external device related to the event on the chat window based on the event profile. Alternatively, the terminal device may be connected to the external device related to the event based on the event profile and display the external device related to the event on the chat window.

A plurality of external devices related to the event may exist. Each external device related to the event may transmit a message inquiring whether to perform a predetermined operation to the terminal device. The terminal device may display the received message on the chat window. Then, the terminal device may display together a button for selecting whether to perform each operation. Meanwhile, although not shown in FIG. 9A, the terminal device may further display a button for collectively performing or canceling jobs.

Referring to FIG. 9B, a chat window in which one external device is selected is shown. The terminal device may receive a user input selecting one external device among external devices related to an event. For example, a user may select a name portion of the external device displayed on the chat window.

Referring to FIG. 9C, a chat window in which an external device selected by a user is removed is shown. The terminal device may remove the selected external device from the chat window when the name portion of the external device is selected. Alternatively, the terminal device may further display a notification window confirming whether to remove the selected external device before selecting the external device.

When receiving a collective job performing instruction or an individual job performing instruction, the terminal device may transmit the input instruction to each external device. Therefore, the terminal device may control a plurality of external devices collectively or individually.

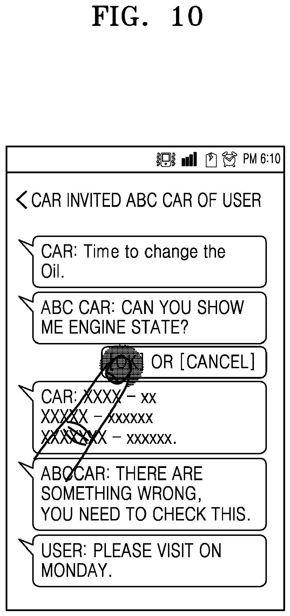

FIG. 10 is a diagram for explaining a control screen of a terminal device according to a fourth embodiment of the present disclosure.

Referring to FIG. 10, a chat window transmitting and receiving a message to and from an ABC car repair shop is shown. As described above, the terminal device (or an external device) is not limited to an independent electronic device. The terminal device (or the external device) may include a server or a control module managing and controlling a car, a building, and the like. Therefore, the terminal device (or the external device) may be a building (or a company or a market) such as a car repair shop that may be connected to a network and may manage or control the building or manage data.

As shown in FIG. 10, a car may transmit an event occurrence signal to the terminal device when a maintenance time or an abnormal condition is detected. The car may then invite the car repair shop related to an event to the chat window. Alternatively, the terminal device receiving the event occurrence signal may generate the chat window and invite the car and the car repair shop. The car may transmit a message to inquire to the terminal device. The terminal device may display the transmitted message. The car repair shop may transmit a request message for a job to the terminal device. A user may choose to confirm or cancel a request of the car repair shop. When the user selects an OK button, the terminal device may receive state information from the car and transmit the received state information to the car repair shop. The car repair shop may transmit a message as a result of checking the state information to the terminal device.

Meanwhile, the car and the car repair shop may transmit and receive messages directly. However, the user needs to confirm the messages. Accordingly, the terminal device may only display the messages such that the user may confirm the message. For example, the car in which an event has occurred may generate the chat window and invite the terminal device and the car repair shop. The terminal device, the car, and the car repair shop all may display the chat window. Processing of messages related to the actual chat window may be performed by the server. Thus, the car and the car repair shop may appear to transmit and receive the messages directly, and the terminal device may display the messages of the car and the car repair shop. However, the terminal device may also display its own messages on the chat window and transmit the messages to the server, and the server may display the messages of the terminal device on the chat window of the car and the car repair shop. Meanwhile, the above-described method may be similarly applied to other embodiments.

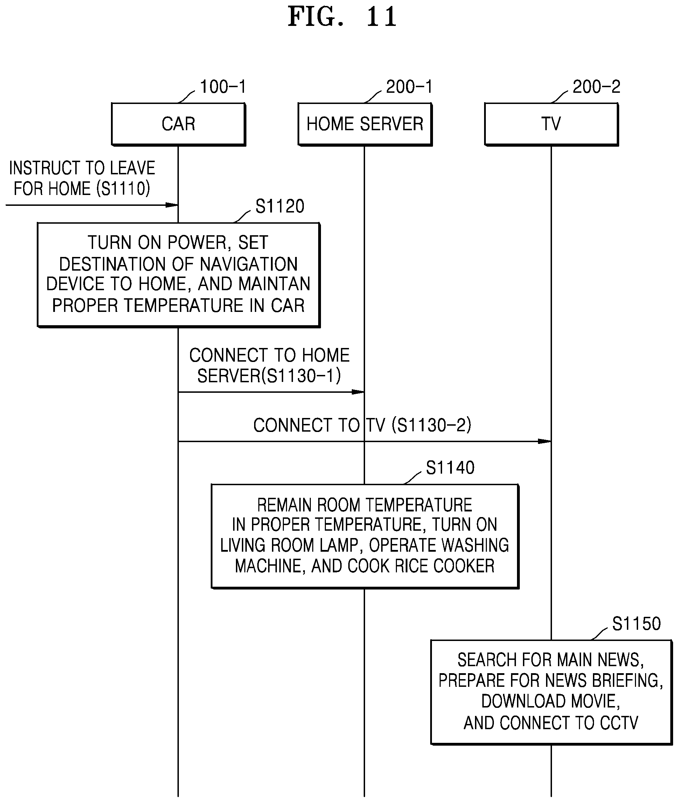

FIG. 11 is a timing diagram for explaining a control process according to a fifth embodiment of the present disclosure.

Referring to FIG. 11, a terminal device control process corresponding to an event to leave for home is shown. A remote control system may include a car 100-1, a home server 200-1, and a TV 200-2. The car 100-1 may receive an instruction to leave for home from a user (S1110). The car 100-1 may determine a destination based on destination information set in a navigation device. Alternatively, in the case of an autonomous car, the car 100-1 may ask the user about the destination and determine the destination based on the destination information input from the user. An event profile regarding the event to leave for home may include the home server 200-1 and the TV 200-2. The car 100-1 may perform a corresponding operation according to the event to leave for home. For example, in the case of the autonomous car, the car 100-1 may turn on power, set the destination of the navigation device to home, set a temperature of a heater in the car, and maintain a proper temperature (S1120).
The car 100-1 may generate a chat window and invite the home server 200-1 and the TV 200-2. When there is no separate terminal device, the car 100-1 may perform a function of a terminal device of the remote control system. Generation of the chat window and invitation of the external device may be performed in various ways. When the car 100-1 transmits an event occurrence signal to a separate terminal device, the separate terminal device may generate a chat window and invite the car 100-1 and an event-related external device to transmit and receive messages and instructions. Alternatively, the car 100-1 may generate the chat window and invite the separate terminal device and the event-related external device. Alternatively, the car 100-1 may generate the chat window and invite only the event-related external device. Also, each device may generate a chat window or launch a messenger application when invited to the chat window to display the chat window.

The car 100-1 may be connected to the home server 200-1 (S1130-1) and may be connected to the TV 200-2 (S1130-2). That is, the car 100-1 may generate the chat window and invite the home server 200-1 and the TV 200-2 to the chat window. The home server 200-1 may inquire whether to perform a predetermined job in connection with the event to leave for home and may perform the job upon receiving a job performing instruction. For example, the home server 200-1 may turn on a heater (or a boiler) to remain a room temperature in a proper temperature, turn on a living room lamp, operate a washing machine, and cook the rice cooker (S1140). Also, the TV 200-2 may perform the predetermined job according to a user instruction. That is, the TV 200-2 may search for main news, prepare for news briefing, download movie, and be connected to a CCTV (S1150).

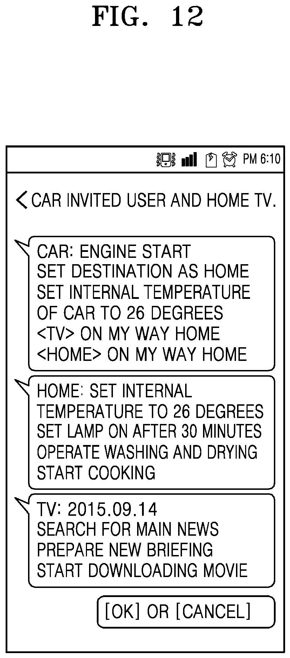

FIG. 12 is a diagram for explaining a control screen of a terminal device according to a fifth embodiment of the present disclosure.

Referring to FIG. 12, a chat window generated according to an event to leave for home is shown. A remote control system described in FIG. 12 may further include a terminal device. That is, the terminal device may generate the chat window when receiving an event occurrence signal from a car, and invite the car and a related external device to display the car and the related external device on the chat window. Alternatively, the car may generate the chat window and invite the terminal device and the related external device. The external device may transmit a message inquiring whether to perform a predetermined job related to the event to the terminal device. Alternatively, the external device may transmit the message inquiring whether to perform the predetermined job to a chat window generated in a server. The terminal device may display a message received directly or indirectly from the external device on the chat window. The terminal device may display a selection button confirming whether to perform a predetermined operation together. According to a selection of a user, the terminal device may transmit a job performing instruction to each external device, and the external device may perform the predetermined job.

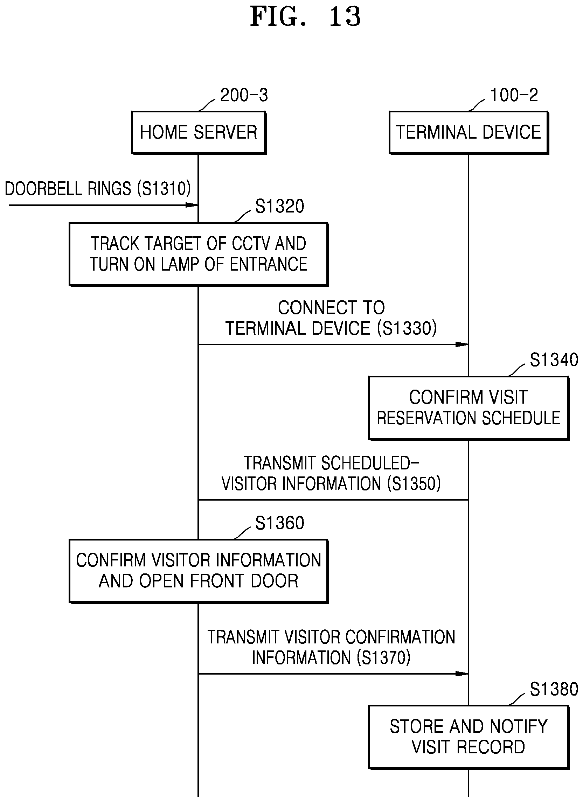

FIG. 13 is a timing chart for explaining a control process according to a sixth embodiment of the present disclosure.

Referring to FIG. 13, a terminal device control process corresponding to an event in which a doorbell rings is shown. A remote control system may include a terminal device 100-2 and a home server 200-3. The event in which the doorbell of home rings may occur (S1310). The home server 200-3 may detect an occurrence of the event when the doorbell rings. When the event in which the doorbell rings occurs, the home server 200-3 may perform a predetermined job. For example, the home server 200-3 may track a target of a CCTV and turn on a lamp of an entrance (S1320). In general, when the event occurs, the external device may inquire of a user whether to perform the predetermined job and may perform the predetermined job according to a user input. However, in an exceptional case such as the event in which the doorbell rings, the external device may perform the predetermined job without the user input.

The home server 200-3 is connected to the terminal device 100-2 (S1330). For example, the home server 200-3 may transmit an event occurrence signal to the terminal device 100-2. The terminal device 100-2 may generate a chat window in response to the received event occurrence signal, invite an external device related to the occurred event, and display the external device on the chat window. Alternatively, the home server 200-3 may generate the chat window and invite the terminal device 100-2. When the terminal device 100-2 is invited to the chat window, the terminal device 100-2 may execute a messenger application and display the invited chat window.

The terminal device 100-2 may confirm a visit reservation schedule in response to the occurred event (S1340). When the visit reservation schedule is confirmed, the terminal device 100-2 may transmit scheduled-visitor information (S1350). The home server 200-3 may confirm whether visitor information matches the scheduled-visitor information received from the terminal device 100-2. When the visitor information matches the scheduled-visitor information, the home server 200-3 may open a front door (S1360). Then, the home server 200-3 may transmit visit confirmation information to the terminal device 100-2 (S1370). The terminal device 100-2 may store a received visit record and may notify the user of the received visit record (S1380). That is, the terminal device 100-2 and the home server 200-3 may transmit and receive scheduled visit information without a user involvement, open the front door, and leave the visit record. Also, the terminal device 100-2 and the home server 200-3 may display a message of a job performing process on the chat window using a messenger application, and thus the user may conveniently check the job performing process later.

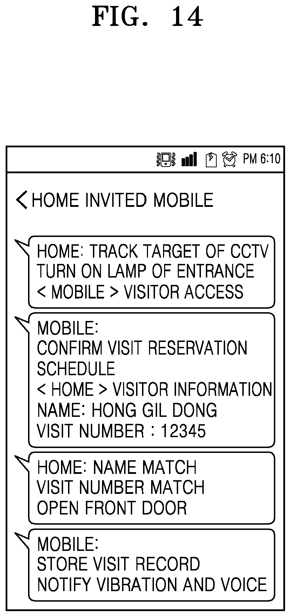

FIG. 14 is a diagram for explaining a control screen of a terminal device according to a sixth embodiment of the present disclosure.

Referring to FIG. 14, a chat window generated according to an event in which a doorbell rings is shown. When the event in which the doorbell rings occurs, a home server may be connected to the terminal device. The home server may execute a messenger application to generate the chat window and invite the terminal device. The home server may display the chat window and the invited terminal device on the chat window. Alternatively, when the event in which the doorbell rings occurs, the home server may transmit an event occurrence signal to the terminal device. Upon receiving the event occurrence signal, the terminal device may generate the chat window and invite an external device related to the event. The terminal device may display the invited external device on the chat window.

The home server may perform a predetermined job and transmit a message including result content of the performed job to the terminal device. The transmitted message (e.g., CCTV turn-on, etc.) may be displayed on the chat window of the terminal device. Also, the terminal device may transmit a message (e.g., visit reservation schedule confirmation information, etc.) including information related to the occurred event to the home server. The transmitted message may be displayed on the chat window of the terminal device. The home server may open a front door when the information received from the terminal device matches information of a visitor. Then, the home server may transmit whether the information received from the terminal device matches the information of the visitor and information that the front door is opened to the terminal device. Meanwhile, the terminal device may store the information transmitted by the home server.

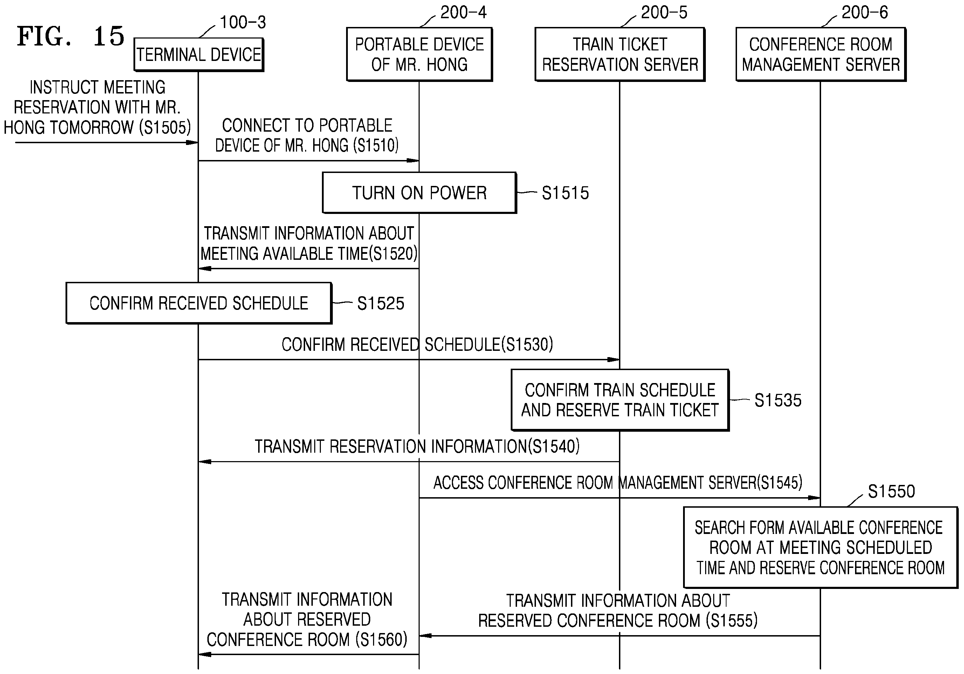

FIG. 15 is a timing chart for explaining a control process according to a seventh embodiment of the present disclosure.

Referring to FIG. 15, a terminal device control process corresponding to a meeting reservation event is shown. A user may input a meeting reservation instruction in the terminal device 100-3 (S1505). In an embodiment, the terminal device 100-3 may receive a user instruction to reserve a meeting with Mr. Hong. The terminal device 100-3 may be connected to a portable device 200-4 of Mr. Hong (S1510). The terminal device 100-3 may generate a chat window and invite the portable device 200-4 of Mr. Hong. Then, the terminal device 100-3 may display the portable device 200-4 of Mr. Hong on the chat window. The portable device 200-4 of Mr. Hong may confirm a schedule of Mr. Hong (S1515). The portable device 200-4 of Mr. Hong may confirm the stored schedule. Also, the portable device 200-4 of Mr. Hong may confirm a schedule of Mr. Hong stored in a different device such as a computer, a notebook, etc. of Mr. Hong registered in the same account. The portable device 200-4 of Mr. Hong may transmit a message including information about a meeting available time to the terminal device 100-3 (S1520). As described above, the terminal device 100-3 and the portable device 200-4 of Mr. Hong may be directly connected. Therefore, the message transmitted by the portable device 200-4 of Mr. Hong may be displayed on the chat window generated by the terminal device 100-3. Also, the terminal device 100-3 of the user and the portable device 200-4 of Mr. Hong may be indirectly connected. Therefore, the message transmitted by the portable device 200-4 of Mr. Hong may be transmitted to a server. Then, the server may generate a chat window and transmit the chat window displaying the message to the user terminal 100-3. The terminal device 100-3 may confirm the schedule received from the portable device 200-4 of Mr. Hong (S1525). Then, the terminal device 100-3 may transmit a meeting confirmation signal to the portable device 200-4 of Mr. Hong.

Meanwhile, the terminal device 100-3 may determine a region in which Mr. Hong is located and perform an operation for reservation of transportation for a meeting with Mr. Hong. The terminal device 100-3 may access a train ticket reservation server 200-5 (S1530). That is, the terminal device 100-3 may generate a new chat window and invite the train ticket reservation server 200-5. The terminal device 100-3 may display the train ticket reservation server 200-5 on the chat window and transmit a train schedule inquiry message to the train ticket reservation server 200-5. The train ticket reservation server 200-5 may confirm a train schedule requested by the terminal device 100-3 and reserve a train ticket (S1535). The train ticket reservation server 200-5 may transmit reservation information to the terminal device 100-3 (S1540). The reservation information may be displayed on the chat window of the terminal device 100-3.

Also, the portable device 200-4 of Mr. Hong may access a conference room management server 200-6 for reservation of a meeting place (S1545). That is, the portable device 200-4 of Mr. Hong may generate a new chat window to display the conference room management server 200-6 on the chat window and transmit a request for an available conference room at a meeting scheduled time to the conference room reservation server 200-6. The conference room management server 200-6 may search for the available conference room in response to the request from the portable device 200-4 of Mr. Hong and reserve a found conference room (S1550). The conference room management server 200-6 may transmit information about the reserved conference room to the portable device 200-4 of Mr. Hong (S1555). The portable device 200-4 of Mr. Hong may transmit the information about the reserved conference room to the portable device 100-3. At this time, the information about the reserved conference room may be displayed on a chat window generated between the terminal device 100-3 and the portable device 200-4 of Mr. Hong. That is, in the embodiment, the terminal device 100-3 may interact with the external devices 200-4 and 200-5 according to a meeting reservation instruction of a user and perform the user instruction (that is, a meeting reservation) and allow the external device 200-5 or another external device 200-6 to perform additional operations (e.g., a reservation of a car, reservation of a meeting place, etc.) according to a user instruction.

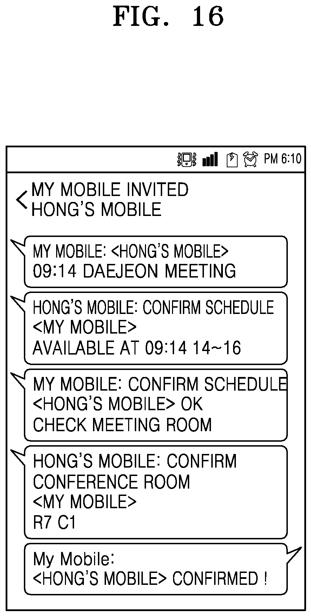

FIG. 16 is a diagram for explaining a control screen of a terminal device according to a seventh embodiment of the present disclosure.

Referring to FIG. 16, a chat window generated according to a meeting reservation event is shown. When the meeting reservation event occurs according to a user instruction, the terminal device of a user may be connected to a portable device of Mr. Hong. The terminal device of the user may execute a messenger application to generate the chat window and invite the portable device of Mr. Hong. The terminal device of the user may display the chat window and display the portable device of Mr. Hong on a chat window.

The portable device of Mr. Hong may interact with the terminal device of the user. The terminal device of the user may transmit a meeting request message to the mobile device of Mr. Hong. The portable device of Mr. Hong may search for a stored schedule. The portable device of Mr. Hong may also search for schedules stored in other terminal devices registered in an account of Mr. Hong. The portable device of Mr. Hong may transmit meeting available time information to the terminal device of the user. The terminal device of the user may transmit meeting confirmation information to the portable device of Mr. Hong according to a search of the stored schedule, a search of schedules stored in other terminal devices registered in an account of the user, or an input of a user approval instruction. The portable device of Mr. Hong may reserve an available conference room at a meeting scheduled time and transmit information of the reserved conference room to the terminal device of the user.

Various embodiments have been described above. A flowchart of a terminal device control method will be described below.

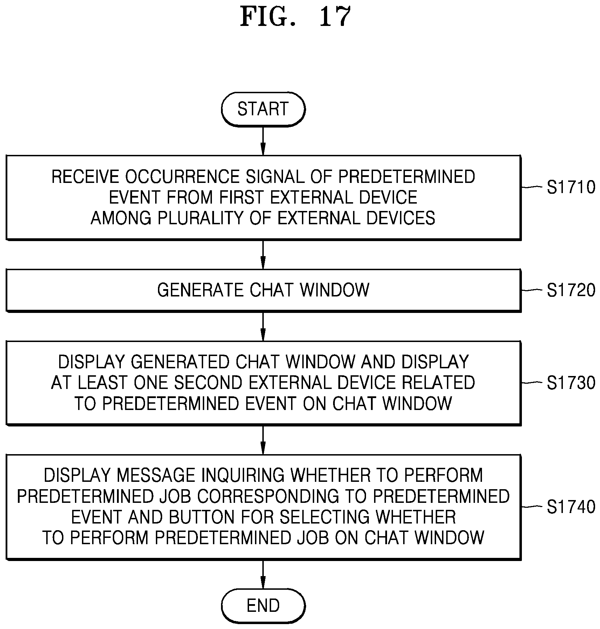

FIG. 17 is a flowchart of a terminal device control method according to an embodiment of the present disclosure.

A terminal device receives an occurrence signal of a predetermined event from a first external device among a plurality of external devices (S1710). The terminal device generates a chat window (S1720). The terminal device displays the generated chat window and displays at least one second external device related to the predetermined event on the chat window (S1730). The terminal device may determine the second external device related to the event based on an event profile. The event profile may include the predetermined event, the second external device corresponding to the predetermined event, and predetermined job information of the second external device. The event profile may be referred to as an action descriptor.

When the event profile is stored in the terminal device, the terminal device may display the chat window before connected to the second external device and display the second external device on the chat window. The terminal device may be connected to the second external device when displaying the second external device on the chat window. Alternatively, when the event profile is stored in a server, the terminal device may access the server, receive the event profile, generate the chat window, and display the second external device on the chat window. Alternatively, the terminal device may be connected to the second external device and generate the chat window to display the second external device on the chat window.

Alternatively, when the predetermined event occurs in the first external device, the first external device may generate the chat window based on the event profile and invite the terminal device and the second external device related to the event. The terminal device and the external device may display the chat window and display all related devices on the chat window.

The terminal device displays a message inquiring whether to perform a predetermined job corresponding to the predetermined event and a button for selecting whether to perform the predetermined job on the chat window (S1740). The second external device related to the event may transmit the message inquiring whether to perform the predetermined job corresponding to the predetermined event to the terminal device. Alternatively, the chat window may be generated in a server such that the server may manage the chat window. The second external device related to the event may transmit the message inquiring whether to perform the predetermined job corresponding to the predetermined event to the server. The server may display the transmitted message on the chat window and transmit the message to chatting devices. The terminal device may transmit an instruction to perform the predetermined job to the second external device according to a user instruction. Meanwhile, when whether to perform the predetermined job within a predetermined time is not selected, the terminal device may automatically transmit the instruction to perform the predetermined job to the second external device. Alternatively, when the second external device does not receive an instruction to determine whether to perform the predetermined job within the predetermined time, the second external device may perform the predetermined job. However, the present disclosure is not limited to this, and the terminal device may automatically transmit an instruction not to perform the predetermined job to the second external device when whether to perform the predetermined job within the predetermined time is not selected.

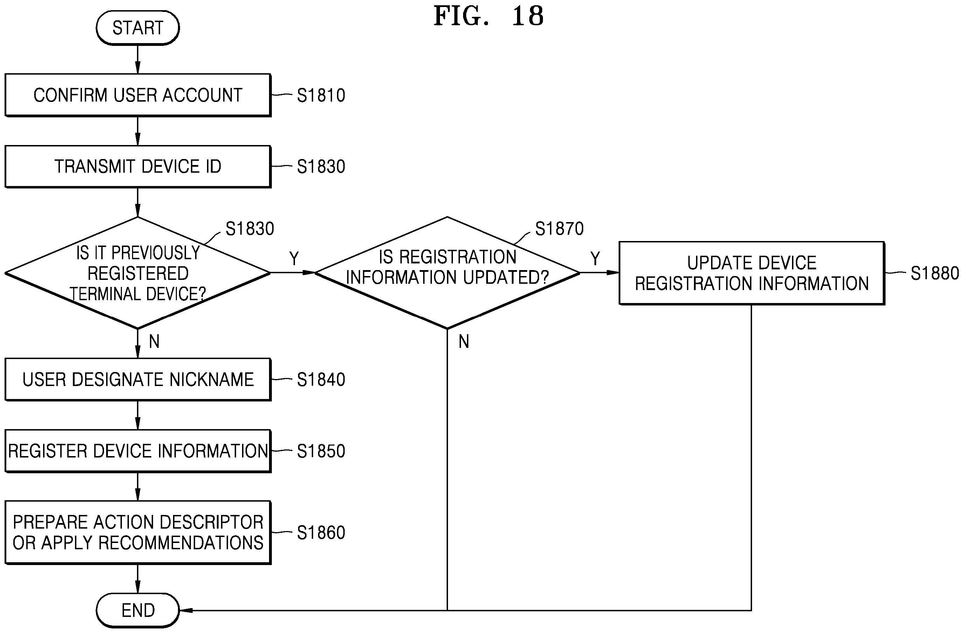

FIG. 18 is a flowchart illustrating a process of registering a terminal device according to an embodiment of the present disclosure.

Referring to FIG. 18, the terminal device (or a device) may confirm a user account for registering the terminal device (S1810). A user may have multiple accounts. A user account may be registered in a server. The terminal device may confirm the user account stored in advance in the terminal device or input from the user. The terminal device may transmit a device ID to the server (S1820). The device ID is unique identification information (e.g., a MAC address, a serial number, etc.) of the terminal device. The terminal device may be distinguished from other terminal devices by using the device ID. The server may confirm whether the terminal device requesting registration is a previously registered terminal device using the device ID (S1830).

When the terminal device is not the previously registered terminal device, the server may register the terminal device. The user may input a nickname of the terminal device. That is, the server may receive the nickname of the terminal device as identification information of the terminal device (S1840). The server may register the terminal device (S1850). The server may register the terminal device by mapping the input nickname, the device ID, and various information of the terminal device. When the user does not input the nickname, the server may register the terminal device with a predetermined name. The terminal device or the server may apply an event profile (an action descriptor) related to the registered terminal device (S1860). As described above, the event profile may be generated or modified by the user. Also, each terminal device may store a basic event profile. For example, a TV may store an event profile that performs a turn-on operation regardless of an event.

Meanwhile, when the terminal device to be registered is the previously registered terminal device, the server may confirm whether registration information has been updated (S1870). In an embodiment, the terminal device may update firmware of the terminal device through software provided by a manufacturer. In this case, the unique information such as the device ID included in the registration information of the terminal device may not be changed, but other information may be changed. Accordingly, the server may confirm whether the latest update is reflected in the registration information of the terminal device, and if not, end a registration procedure. When the latest update is reflected in the registration information of the terminal device, the server may update the registration information of the terminal device stored in the server (S1880). A new terminal device may be registered in the user account and the registration information of the terminal device stored in the server may be updated through the above process.

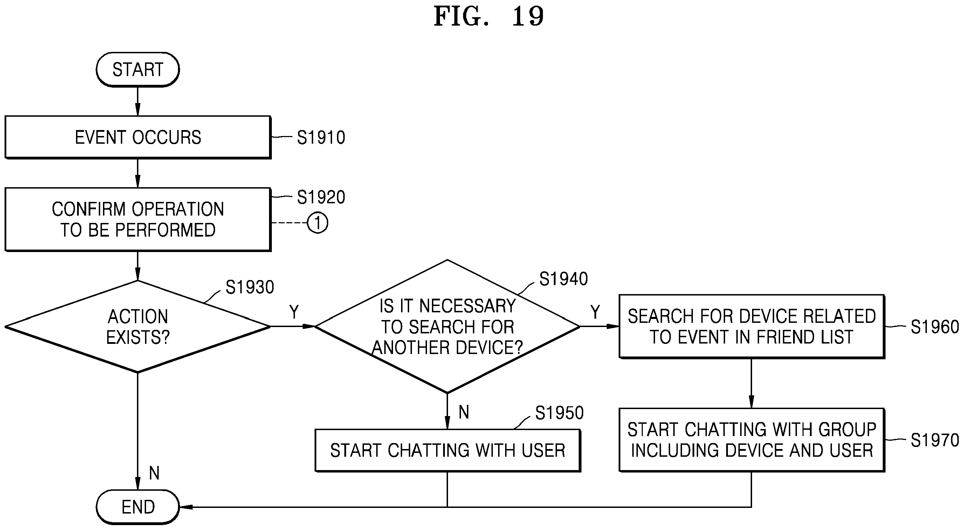

FIG. 19 is a flowchart illustrating a process of generating a chat room according to an embodiment of the present disclosure.

Referring to FIG. 19, an event occurs in a first external device (or a terminal device) (S1910). The event may be set in various ways. The event may include, for example, an event in which a car leaves for home, an event in which a doorbell rings, an event in which an abnormal condition of the car is detected, or an event in which a temperature falls below a predetermined temperature, etc. Also, the first external device may transmit an event occurrence signal to the terminal device to inform the terminal device of the occurred event.

The terminal device may confirm an operation to be performed by itself (S1920). The operation to be preformed may be determined based on a predetermined event profile. A specific procedure confirming the operation to be performed will be described later. When there is no operation to be performed by the terminal device, the procedure may be terminated.

When there is the operation to be performed by the terminal device, the terminal device may determine whether it is necessary to search for a second external device (S1940). When it is not necessary to search for the second external device, the terminal device may generate a chat window and display a message to a user (S1950). That is, the terminal device may start a chat with the user. When it is necessary to search for the second external device, the terminal device may access an account of the terminal device and search for the second external device related to the event in a friend list (S1960). The terminal device may generate a chat window and start a group chat by including the found second external device in the chat window (S1970).

As described above, a remote control system may include the terminal device (a main device), the first external device in which the event occurs, and the second external device that performs an instruction. According to the occurred event, the terminal device (the main device) may perform a role of the first external device or the second external device, and the first external device or the second external device may perform a role of the terminal device (the main device). Meanwhile, in FIG. 19, for convenience of explanation, the first external device and the second external device are separate devices, but the first external device and the second external device may be the same device.

The process of generating the chat window described in FIG. 19 may be a process performed by the terminal device (the main device), the first external device, or the second external device. That is, the process of generating the chat window according to the event and performing the instruction may be somewhat different, and the process of generating the chat window and performing the n instruction according to an embodiment may be somewhat different.

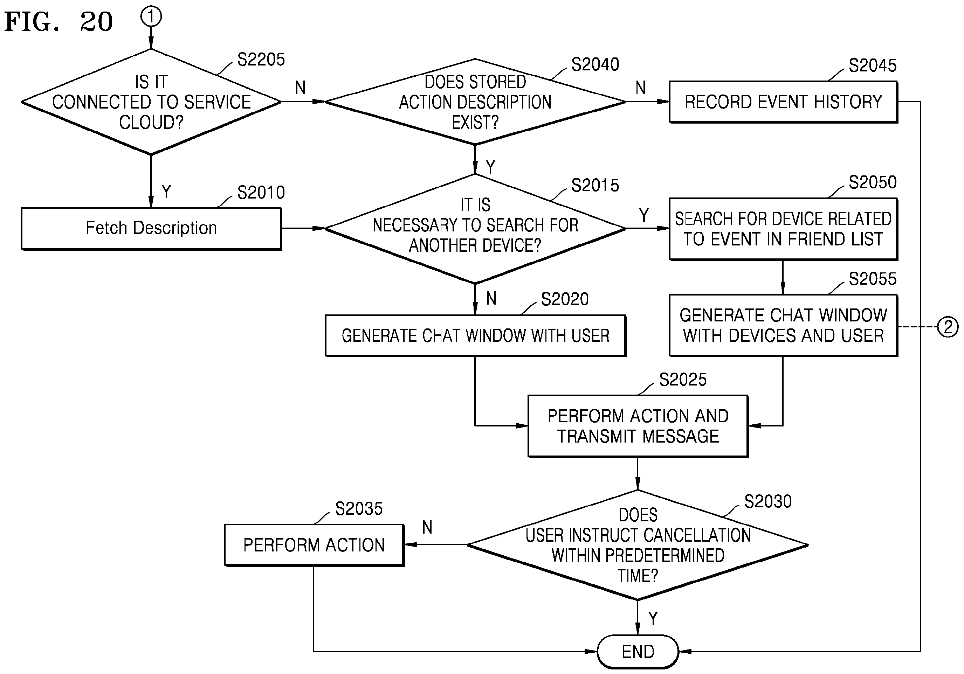

FIG. 20 is a diagram for explaining a process of performing a control job according to an embodiment of the present disclosure.

Referring to FIG. 20, a specific procedure performed by a terminal device of confirming an operation to be performed is shown. In an embodiment, the terminal device may confirm whether the terminal device is connected to a server (S2005). For example, the server may be a service cloud. When the terminal device is connected to the server, the terminal device may patch an event profile (S2010). The event profile may also be referred to as an action descriptor. The terminal device may determine whether it is necessary to search for a second external device (a device) based on the patched event profile (S2015). When the terminal device does not need to search for the second external device, the terminal device may generate a chat window (S2020). Meanwhile, when the terminal device is not a main device (e.g., a personal portable device) of a user, the terminal device may include the main device of the user in the chat window. As such, the main device of the user may always be included in the chat window without being related to the event. The terminal device may generate a chat window and display a message related to the operation to be performed (S2025). Alternatively, the terminal device may transmit the message. For example, the message related to the operation to be performed may include a message inquiring whether to perform a predetermined operation.

The terminal device may determine whether the user instructs confirmation or cancellation within a predetermined time (S2030). According to an embodiment, the terminal device may receive a user instruction directly or from another terminal device. When the user instructs cancellation within the predetermined time, the terminal device may not perform the operation. When the user does not instruction cancellation within the predetermined time, the terminal device may perform the operation (S2035). That is, when the user selects OK within the predetermined time, the terminal device may perform the predetermined operation. Alternatively, when the user does not make any instruction within the predetermined time, the terminal device may perform the predetermined operation.

Meanwhile, the terminal device may not be connected to the server. The terminal device may determine whether there is a stored event profile (S2040). When the terminal device determines that the event profile is not stored, the occurred event may be recorded in an event history (S2045). Since the event history includes a history of a previously occurred event, the terminal device may refer to the event history to generate and modify the event profile. When the terminal device determines that the event profile is stored, the terminal device may determine whether it is necessary to search for the second external device according to the stored event profile (S2015).

When the terminal device does not need to search for the second external device, the terminal device may generate a chat window (S2020). When the terminal device needs to search for the second external device, the terminal device may access an account to which the terminal device is registered and search for the second external device related to the event in a friend list (S2050). The terminal device may generate a chat window including the found second external device (S2055). When the terminal device is not a main device (e.g., a personal portable device) of the user, the terminal device may also include the main device of the user in the chat window. The main device of the user may always be included in the chat window even when it is not related to the event. The terminal devices included in the chat window may be added or removed. A procedure of adding or removing the terminal device will be described later. The terminal device may generate a chat window and display a message related to the operation to be performed (S2025). Alternatively, the terminal device may transmit the message.

The terminal device may determine whether the user instructions confirmation or cancellation within a predetermined time (S2030). According to an embodiment, the terminal device may receive a user instruction directly or from another terminal device. When the user instructs cancellation within the predetermined time, the terminal device may not perform the operation. When the user does not instruction cancellation within the predetermined time, the terminal device may perform the operation (S2035). That is, when the user selects OK within the predetermined time, the terminal device may perform the predetermined operation. Alternatively, when the user does not make any instruction within the predetermined time, the terminal device may perform the predetermined operation.

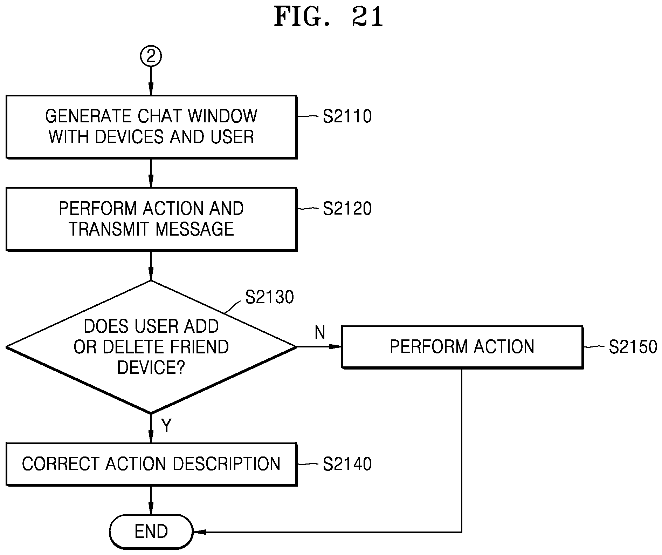

FIG. 21 is a diagram for explaining a process of correcting a registered terminal device according to an embodiment of the present disclosure.

Referring to FIG. 21, a terminal device may generate a chat window including a found terminal device (S2110). When the terminal device is not a main device (e.g., a personal portable device) of a user, the terminal device may also include the main device of the user in the chat window. The main device of the user may always be included in the chat window even when it is not related to the event. The terminal device may generate a chat window and display a message related to an operation to be performed (S2120). Alternatively, the terminal device may transmit the message to the main device. For example, the message related to the operation to be performed may include a message inquiring whether to perform a predetermined operation.

The user may delete the device included in the chat window. Alternatively, the user may add a device not included in the chat window. The terminal device may determine whether the device included in the chat window is deleted or a new device is added (S2130). When there is a change in chatting devices, the terminal device may correct an event profile (an action descriptor) (S2140). The terminal device may store the corrected event profile. When the corrected event profile is stored in the terminal device, the chatting devices may also share and/or save the corrected event profile. Meanwhile, when the corrected event profile is stored in a server, the terminal device transmits the corrected event profile to the server, and the server may store the transmitted event profile. When there is no change in the chatting devices, the terminal device may perform the predetermined operation (S2150).

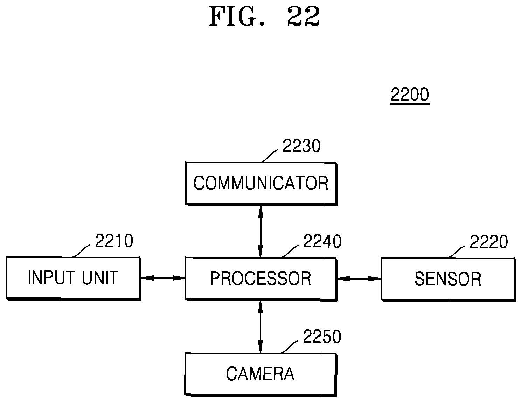

FIG. 22 is a block diagram of a terminal device 2200 according to another embodiment of the present disclosure.

Referring to FIG. 22, the terminal device 2200 includes an input unit 2210, a sensor 2220, a communicator 2230, a processor 2240, and a camera 2250. In the present embodiment, the terminal device 2200 may be, for example, a smart phone, connected to an external device wirelessly, and may control an external device through a chat window displayed on a screen as described above.

The input unit 2210, the sensor 2220, and the communicator 2230 are similar to those described with reference to FIG. 3, and thus detailed descriptions thereof will be omitted.

The camera 2250 may capture still images and moving images and may include one or more image sensors (e.g., front sensors or rear sensors), a lens, an image signal processor (ISP), or a flash (e.g., an LED or a xenon lamp). The camera 2250 may capture an object to acquire an object image. Also, in the present embodiment, the camera 2250 may capture a QR code attached to an external device, obtain a QR code image, and provide the QR code image to the processor 2240. The processor 2240 may acquire communication configuration information for connecting with the external device and data necessary for controlling the external device from the provided QR code.

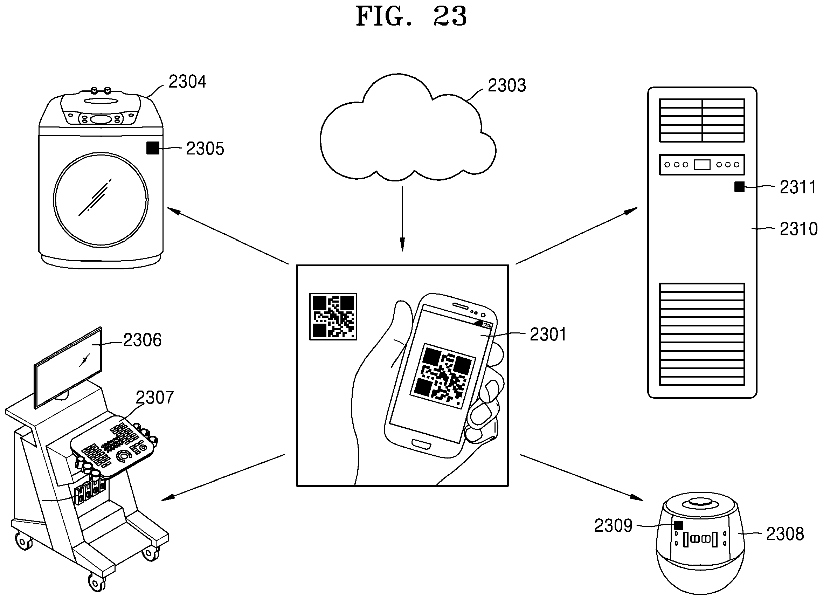

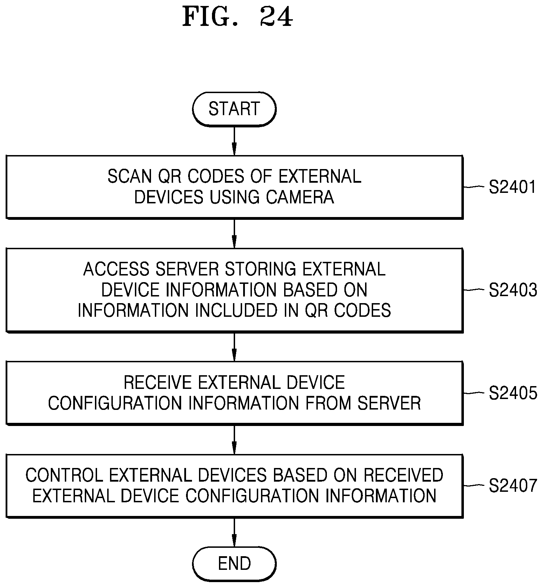

FIG. 23 illustrates an example in which a terminal device 2301 is connected to external devices 2304, 2306, 2308, and 2310 through QR codes 2305, 2307, 2309, and 2311 according to another embodiment of the present disclosure. FIG. 24 illustrates a method of connecting the terminal device 2301 to the external devices 2304, 2306, 2308, and 2310 through the QR codes 2305, 2307, 2309, and 2311 according to another embodiment of the present disclosure. Hereinafter, a method of operating the terminal device 2301 shown in FIG. 24 will be described with reference to an example shown in FIG. 23.

Referring to FIG. 23, the terminal device 2301 may be connected to the various external devices 2304, 2306, 2308, and 2310. To connect the terminal device 2301 and the external device external devices 2304, 2306, 2308 and 2310, it is necessary to register each of the external devices 2304, 2306, 2308 and 2310 in the terminal device 2301. A camera included in the terminal device 2301 may be used to register the external devices 2304, 2306, 2308, and 2310 in the terminal device 2301 according to another embodiment of the present disclosure.

The external devices 2304, 2306, 2308, and 2310 are manufactured by various manufacturers, and each has a different format of instruction system. Information about control instructions necessary for controlling the external devices 2304, 2306, 2308, and 2310 may be stored in the external devices 2304, 2306, 2308, and 2310 or stored in a server 2303 operated by each manufacturer. In the embodiment of the present disclosure, it is assumed that the about control instructions necessary for controlling the external devices 2304, 2306, 2308, and 2310 is stored in the server 2303 of each manufacturer. However, the server 2303 may be a server of a third party.

It is assumed that the terminal device 2301 is connected to the server 2303 of each manufacturer to acquire the information about control instructions necessary for controlling the external devices 2304, 2306, 2308, and 2310. However, the present disclosure is not limited to this, and it is also possible for the terminal device 2301 to acquire the information about control instructions directly from the external devices 2304, 2306, 2308, and 2310. The terminal device 2301 may scan the QR codes 2305, 2307, 2309, and 2311 of the external devices 2304, 2306, 2308, and 2310 using the camera (S2401) and obtain basic information about the external devices 2304, 2306, 2308, and 2310. For example, the QR codes 2305, 2307, 2309, and 2311 may include IP addresses of the external devices 2304, 2306, 2308, and 2310, MAC addresses, names of the external devices 2304, 2306, 2308, and 2310, and an address of the server 2303 that stores the information about the control instructions for controlling the external devices 2304, 2306, 2308, and 2310. The names of the external devices 2304, 2306, 2308, and 2310 may be arbitrarily assigned by the manufacturers when manufacturing the external devices 2304, 2306, 2308, and 2310.

The terminal device 2301 accesses the server 2303 that stores the information about the control instructions for controlling the external devices 2304, 2306, 2308, and 2310 based on the information included in the QR codes 2305, 2307, 2309, and 2311 (S2403).

For example, the washing machine 2304 is manufactured by a manufacturer A, and the QR code 2305 attached to the washing machine 2304 includes the IP address of the washing machine 2304, the name of the washing machine 2304, and the address of the server 2303 that stores the information about the control instruction for the washing machine 2304. When a user scans the QR code 2305 of the washing machine 2304 using the terminal device 2301, the QR code image 2305 may be generated by the terminal device 2301 and the terminal device 2301 may obtain the address of the server 2303 that stores the IP address of the washing machine 2304, the name of the washing machine 2304, and the information about the control instruction for the washing machine 2304 from the QR code image 2305.

The terminal device 2301 may obtain the information about the control instructions for controlling the external devices 2304, 2306, 2308, and 2310 from the server 2303. More specifically, the information about the control instructions is information for the terminal device 2301 to control the external devices 2304, 2306, 2308, and 2310, and includes, for example, configuration information used for the terminal device 2301 to initially configure (or register) the external devices 2304, 2306, 2308, and 2310, control instruction data, data format information supported by the external devices 2304, 2306, 2308, and 2310, and the like. The terminal device 2301 may receive the configuration information of the external devices 2304, 2306, 2308, and 2310 from the server 2303 (S2405), and control the external devices 2304, 2306, 2308, and 2310 based on the received configuration information of the external devices 2304, 2306, 2308, and 2310 (S2407). However, the present disclosure is not limited thereto, and the terminal device 2301 may request the server 2303 to receive the configuration information of the external devices 2304, 2306, 2308, and 2310 through separate communication.

For example, the terminal device 2301 may communicate with the washing machine 2304 using the IP address of the washing machine 2304. Also, the terminal device 2301 may access the server 2303 and download configuration information and control instruction data for controlling the washing machine 2304 to control the washing machine 2304.

The ultrasound diagnostic device 2306 is manufactured by a manufacturer B and the QR code 2307 attached to the ultrasound diagnostic device 2306 may include an IP address of the ultrasound diagnostic device 2306, a name of the ultrasound diagnostic device 2306, and an address of the server 2303 that stores information about the control instruction for controlling the ultrasound diagnostic device 2306. When the user scans the QR code 2307 of the ultrasonic diagnostic apparatus 2306 using the terminal device 2301, the terminal device 2301 may obtain the IP address of the ultrasound diagnostic device 2306, the name of the ultrasound diagnostic device 2306, and the address of the server 2303 that stores the information about the control instruction for controlling the ultrasound diagnostic device 2306. The terminal device 2301 may communicate with the ultrasonic diagnostic device 2306 using the IP address of the ultrasonic diagnostic device 2306. The terminal device 2301 may also be connected to the server 2303 to download control instruction data of the ultrasonic diagnostic device 2306 and control the ultrasonic diagnostic device 2306.

The electric rice cooker 2308 is manufactured by a manufacturer C and the QR code 2309 attached to the electric rice cooker 2308 may include an IP address of the electric rice cooker 2308, a name of the electric rice cooker 2308, and an address of the server 2303 that stores information about the control instruction for controlling the electric rice cooker 2308. The terminal device 2301 may communicate with the electric rice cooker 2308 using the IP address of the electric rice cooker 2308 as described above. The terminal device 2301 may also be connected to the server 2303 to acquire control instruction data of the electric rice cooker 2308and control the electric rice cooker 2308.

The air conditioner 2310 is manufactured by the manufacturer C and the QR code 2311 attached to the air conditioner 2310 may include an IP address of the air conditioner 2310, a name of the air conditioner 2310, and an address of the server 2303 that stores information about the control instruction for controlling the air conditioner 2310. The terminal device 2301 may communicate with the air conditioner 2310 using the IP address of the air conditioner 2310 as described above. Also, the terminal device 2301 may access the server 2303, obtain control instruction data of the air conditioner 2310, and control the air conditioner 2310.

The terminal device 2301 may interpret the natural language input in the chat window of a messenger application using the control instruction data acquired from the server 2303 and control the external devices 2304, 2306, 2308, and 2310 based on an interpretation result. Specifically, the terminal device 2301 may store an agent program for converting a natural language message input by the user into an instruction for controlling the external devices 2304, 2306, 2308, and 2310.

For example, when the user calls the washing machine 2304 in the message chat window and inputs a message "start laundry", the terminal device 2301 may analyze the message input by the user and determine whether there are characters (or a sentence) corresponding to the control instruction data acquired from the server 2303. When there is the sentence corresponding to the control instruction data of the washing machine 2304, the terminal device 2301 may transmit an instruction to the washing machine 2304 to turn "on" the washing machine 2304.

It is described above that the characters or the sentence corresponding to the control instruction data of the external devices 2304, 2306, 2308, and 2310 is extracted from the message using the characters or the sentence constituting the message, but the present disclosure is not limited thereto. The terminal device 2301 may extract an image or a voice corresponding to the control instruction data of the external devices 2304, 2306, 2308, and 2310 from the message when the message includes the image or the voice. Also, when the message includes a moving image, the terminal device 2301 may extract the moving image corresponding to the control instruction data of the external devices 2304, 2306, 2308, and 2310 from the message.

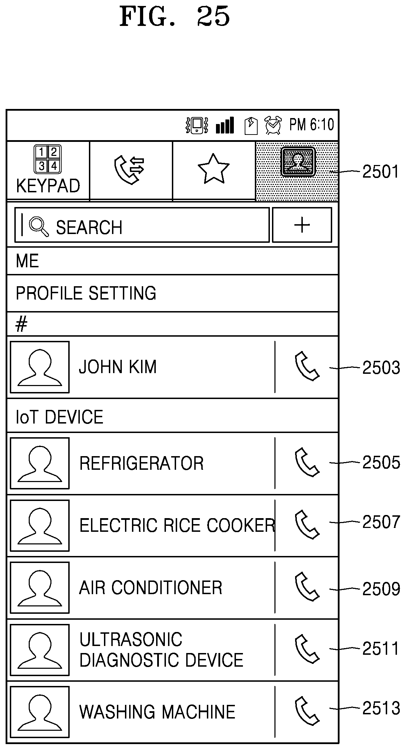

FIG. 25 shows an example in which a terminal device registers external devices 2505, 2507, 2509, 2511, and 2513 in a contact 2501 according to another embodiment of the present disclosure.

Referring to FIG. 25, a contact 2501 list includes a contact 2503 of a third party and contacts for communicating with the external devices 2505, 2507, 2509, 2511, and 2513. The external devices 2505, 2507, 2509, 2511, and 2513 may be registered in the contact 2501 using identification information of the external devices 2505, 2507, 2509, 2511, and 2513. For example, the identification information of the external devices 2505, 2507, 2509, 2511, and 2513 registered in the contact 2501 may be a refrigerator 2505, an electric rice cooker 2507, an air conditioner 2509, an ultrasonic diagnostic device 2511, a washing machine 2513, and the like. The identification information of the external devices 2505, 2507, 2509, 2511, and 2513 may be determined according to types of the external devices 2505, 2507, 2509, 2511, and 2513 provided by manufacturers, or may be determined by a user input.

The terminal device may scan a QR code stored in (or attached to) each of the external devices 2505, 2507, 2509, 2511, and 2513 via a camera, obtain an IP address of each of the external devices 2505, 2507, 2509, 2511, and 2513, a name of each of the external devices 2505, 2507, 2509, 2511, and 2513, and address information of a server that stores information about a control instruction for controlling the external devices 2505, 2507, 2509, 2511, and 2513 from the QR code, and register the IP address, the name, and the address information in the contact 2501 list. The terminal device may group a list of the external devices 2505, 2507, 2509, 2511, and 2513 registered in the contact 2501 list into one group and receive a group name from a user.

When the user executes a contact application, the terminal device may display an execution window of the contact application in which the contact 2501 list is displayed, and receive a user input for selecting one of the external devices 2505, 2507, 2509, 2511, and 2513 included in the contact 2501 list. In this case, the terminal device may execute a SMS application for transmitting a message to the selected external device.

For example, when the user selects the electric rice cooker 2507 from among the external devices 2505, 2507, 2509, 2511, and 2513 displayed on the contact 2501 list and inputs an SMS message "Cook rice" in an execution window of the SMS application of the terminal device, the terminal device may analyze the SMS message and extract characters corresponding to control instruction data of the electric rice cooker 2507 from the SMS message. The terminal device may generate the control instruction data based on a data format supported by the electric rice cooker 2507. The terminal device may transmit the control instruction data to an IP address of the electric rice cooker 2507. The electric rice cooker 2507 may receive the control instruction data and cook rice.

Also, the terminal device may execute a voice recognition application when one external device is selected in the contact application according to a user input. In this case, the user may have a voice instruction to the electric rice cooker 2507 by a voice input, and the terminal device may analyze a user's voice, generate control instruction data for controlling the electric rice cooker 2507, and transmit the control instruction data to the IP address of the electric rice cooker 2507.

The terminal device may also receive a user input in the execution window of the contact application to execute a call application that connects a call with a device displayed on the contact or execute a video chat application connecting a video call with the device displayed on the contact.

The control method of the terminal device according to the above-described various embodiments may be implemented as a program and provided to a processor.

For example, a non-transitory computer readable medium storing a program executing receiving an occurrence signal of a predetermined event from a first external device among a plurality of external devices, generating a chat window, displaying the generated chat window, and displaying at least one second external related to the predetermined event on the chat window, and displaying a message inquiring whether to perform a predetermined job corresponding to the predetermined event and a button for selecting whether to perform the predetermined job on the chat window may be provided.

The non-transitory readable medium is not a medium for storing data for a short time such as a register, a cache, a memory, etc., but is a medium that semi-permanently stores data and may be read by a device. In particular, the various applications or programs described above may be stored on non-volatile readable media such as CD, DVD, hard disk, Blu-ray disk, USB, memory card, ROM, etc.

While the present disclosure has been particularly shown and described with reference to exemplary embodiments thereof, it will be understood by those of ordinary skill in the art that various changes in form and detail may be made therein without departing from the scope of the present disclosure as defined by the following claims and equivalents thereof.

## Claims

1. A terminal device (100) comprising:
a communicator (110) configured to communicate with a plurality of external devices;
a display (120) configured to generate and display a chat window upon receiving an occurrence signal for a predetermined event from a first external device among the plurality of external devices; and
a processor (130) configured to control the communicator (110) to connect to at least one second external device related to the predetermined event,
wherein the processor (130) is further configured to control the display (120) to display:
the at least one second external device in the chat window;
a message inquiring whether to perform a predetermined job corresponding to the predetermined event;
and a graphic user interface (GUI) for selecting whether to perform the predetermined job,
wherein the processor (130) is further configured to group the at least one second external device based on a time at which the predetermined job is performed corresponding to the predetermined event or a distance between the terminal device and the at least one second external device, and control the display (120) to display the grouped at least one second external device in the chat window when the predetermined event occurs and satisfies a condition with regard to the time or the distance.

2. The terminal device of claim 1, wherein the processor (130) is further configured to control the communicator (110) to receive the message inquiring whether to perform the predetermined job corresponding to the predetermined event from the at least one second external device.

3. The terminal device of claim 1, wherein the processor (130) is further configured to control the communicator (110) to automatically transmit an instruction to perform the predetermined job to the at least one second external device when whether to perform the predetermined job is not selected within a predetermined time.

4. The terminal device of claim 1, wherein the processor (130) is further configured to delete selected one device from the chat window upon receiving an instruction to select one of the at least one second external device displayed on the chat window.

5. The terminal device of claim 1, wherein the processor (130) is further configured to display a third external device on the chat window in response to an instruction to add the third external device not displayed on the chat window to the chat window.

6. The terminal device of claim 5, wherein the display (120) is further configured to display a message inquiring whether to perform at least one of a job related to the occurred predetermined event or a predetermined main job of the third external device on the chat window.

7. The terminal device of claim 1, further comprising:
a memory (150) configured to store the predetermined event and an event profile in which the at least one second external device related to the predetermined event is set.

8. The terminal device of claim 1, wherein the at least one second external device is a device registered in a same user account.

9. A method of controlling a terminal device, the method comprising:
receiving an occurrence signal of a predetermined event from a first external device among a plurality of external devices (S1710);
generating a chat window (S1720);
displaying the generated chat window and displaying at least one second external device related to the predetermined event on the chat window (S1730); and
displaying on the chat window a message inquiring whether to perform a predetermined job corresponding to the predetermined event and a graphic user interface (GUI) for selecting whether to perform the predetermined job (S1740),
further comprising the step of grouping the at least one second external device based on a time at which the predetermined job is performed corresponding to the predetermined event or a distance between the terminal device and the at least one second external device, and controlling the display to display the grouped at least one second external device on the chat window when the predetermined event occurs and satisfies a condition with regard to the time or the distance.

10. The method of claim 9, further comprising:
connecting the terminal device to the at least one second external device related to the predetermined event; and
receiving the message inquiring whether to perform the predetermined job corresponding to the predetermined event from the at least one second external device.

11. The method of claim 9, further comprising: automatically transmitting an instruction to perform the predetermined job to the at least one second external device when whether to perform the predetermined job is not selected within a predetermined time.

12. The method of claim 9, further comprising: removing selected one device from the chat window upon receiving an instruction to select one of the at least one second external device displayed on the chat window.

13. The method of claim 9, further comprising: displaying a third external device not displayed in the chat window on the chat window in response to an instruction to add the third external device to the chat window.

14. A remote control system comprising:
a first external device configured to transmit an occurrence signal for a predetermined event to a terminal device;
the terminal device configured to connect to at least one second external device related to the predetermined event upon receiving the occurrence signal for the predetermined event; and
at least one second external device configured to transmit a message inquiring whether to perform a predetermined job corresponding to the predetermined event to the terminal device,
wherein the terminal device is configured to generate a chat window to display the connected at least one second external device and the received message in the generated chat window,
wherein the terminal device is configured to group the at least one second external device based on a time or a distance related to the predetermined job is performed and display the grouped at least one second external device on the chat window when the predetermined event occurs and satisfies a condition with regard to the time or the distance related to the predetermined job.

## Patentansprüche

1. Endgerätevorrichtung (100), umfassend:
Kommunikationsvorrichtung (110), die dafür ausgelegt ist, mit einer Vielzahl von externen Vorrichtungen zu kommunizieren;
Anzeige (120), die dafür ausgelegt ist, ein Chatfenster zu erzeugen und anzuzeigen, wenn sie ein Vorfallsignal für ein vorgegebenes Ereignis von einer ersten externen Vorrichtung aus der Vielzahl von externen Vorrichtungen empfängt; und
Prozessor (130), der dafür ausgelegt ist, die Kommunikationsvorrichtung (110) zu steuern, um sich mit mindestens einer zweiten externen Vorrichtung in Bezug auf das vorgegebene Ereignis zu verbinden,
wobei der Prozessor (130) ferner dafür ausgelegt ist, die Anzeige (120) zu steuern, um Folgendes anzuzeigen:
die mindestens eine zweite externe Vorrichtung im Chatfenster;
Nachricht, in der gefragt wird, ob eine vorgegebene Aufgabe entsprechend dem vorgegebenen Ereignis ausgeführt werden soll;
und eine grafische Benutzeroberfläche (GUI) zum Auswählen, ob die vorgegebene Aufgabe ausgeführt werden soll,
wobei der Prozessor (130) ferner dafür ausgelegt ist, die mindestens eine zweite externe Vorrichtung basierend auf einem Zeitpunkt zu gruppieren, zu dem die vorgegebene Aufgabe entsprechend dem vorgegebenen Ereignis oder einem Abstand zwischen der Endgerätevorrichtung und der mindestens einen zweiten externen Vorrichtung ausgeführt wird, und die Anzeige (120) zu steuern, um die gruppierte mindestens eine zweite externe Vorrichtung in dem Chatfenster anzuzeigen, wenn das vorgegebene Ereignis eintritt und eine Bedingung hinsichtlich der Zeit oder des Abstands erfüllt.

2. Endgerätevorrichtung nach Anspruch 1, wobei der Prozessor (130) ferner dafür ausgelegt ist die Kommunikationsvorrichtung (110) zu steuern, um die Nachricht zu empfangen, in der gefragt wird, ob die vorgegebene Aufgabe entsprechend dem vorgegebenen Ereignis von der mindestens einen zweiten externen Vorrichtung ausgeführt werden soll.

3. Endgerätevorrichtung nach Anspruch 1, wobei der Prozessor (130) ferner dafür ausgelegt ist, die Kommunikationsvorrichtung (110) zu steuern, um automatisch eine Anweisung zum Ausführen der vorgegebenen Aufgabe an die mindestens eine zweite externe Vorrichtung zu übertragen, wenn nicht innerhalb einer vorgegebenen Zeit ausgewählt wird, ob die vorgegebene Aufgabe ausgeführt werden soll.

4. Endgerätevorrichtung nach Anspruch 1, wobei der Prozessor (130) ferner dafür ausgelegt ist, die ausgewählte eine Vorrichtung aus dem Chatfenster zu löschen, nachdem er eine Anweisung erhalten hat, eine der mindestens einen zweiten externen Vorrichtung auszuwählen, die im Chatfenster angezeigt wird.

5. Endgerätevorrichtung nach Anspruch 1, wobei der Prozessor (130) ferner dafür ausgelegt ist, eine dritte externe Vorrichtung im Chatfenster anzuzeigen, als Reaktion auf eine Anweisung, die dritte externe Vorrichtung, die nicht im Chatfenster angezeigt wird, dem Chatfenster hinzuzufügen.

6. Endgerätevorrichtung nach Anspruch 5, wobei die Anzeige (120) ferner dafür ausgelegt ist, eine Nachricht anzuzeigen, in der gefragt wird, ob mindestens eine von einer Aufgabe mit Bezug auf das eingetretene vorgegebene Ereignis oder eine vorgegebene Hauptaufgabe der dritten externen Vorrichtung im Chatfenster ausgeführt werden soll.

7. Endgerätevorrichtung nach Anspruch 1, ferner umfassend:
Speicher (150), der dafür ausgelegt ist, das vorgegebene Ereignis und ein Ereignisprofil zu speichern, in dem die mindestens eine zweite externe Vorrichtung mit Bezug zum vorgegebenen Ereignis eingestellt ist.

8. Endgerätevorrichtung nach Anspruch 1, wobei die mindestens eine zweite externe Vorrichtung eine Vorrichtung ist, die in einem selben Benutzerkonto registriert ist.

9. Verfahren zum Steuern einer Endgerätevorrichtung, wobei das Verfahren umfasst:
Empfangen eines Vorfallsignals eines vorgegebenen Ereignisses von einer ersten externen Vorrichtung unter einer Vielzahl von externen Vorrichtungen (S1710);
Erzeugen eines Chatfensters (S1720);
Anzeigen des erzeugten Chatfensters und Anzeigen mindestens einer zweiten externen Vorrichtung mit Bezug auf das vorgegebene Ereignis im Chatfenster (S1730); und
Anzeigen einer Nachricht im Chatfenster, in der gefragt wird, ob eine vorgegebene Aufgabe entsprechend dem vorgegebenen Ereignis ausgeführt werden soll, und einer grafischen Benutzeroberfläche (GUI) zum Auswählen, ob die vorgegebene Aufgabe (S1740) ausgeführt werden soll, ferner umfassend den Schritt des Gruppierens der mindestens einen zweiten externen Vorrichtung basierend auf einem Zeitpunkt, zu dem die vorgegebene Aufgabe entsprechend dem vorgegebenen Ereignis oder einem Abstand zwischen der Endgerätevorrichtung und der mindestens einen zweiten externen Vorrichtung ausgeführt wird, und des Steuerns der Anzeige, um die gruppierte mindestens eine zweite externe Vorrichtung im Chatfenster anzuzeigen, wenn das vorgegebene Ereignis eintritt und eine Bedingung hinsichtlich der Zeit oder des Abstands erfüllt.

10. Verfahren nach Anspruch 9, ferner umfassend:
Verbinden der Endgerätevorrichtung mit der mindestens einen zweiten externen Vorrichtung mit Bezug auf das vorgegebene Ereignis; und
Empfangen der Nachricht, in der gefragt wird, ob die vorgegebene Aufgabe entsprechend dem vorgegebenen Ereignis von der mindestens einen zweiten externen Vorrichtung ausgeführt werden soll.

11. Verfahren nach Anspruch 9, ferner umfassend: Automatisches Übertragen einer Anweisung zum Ausführen der vorgegebenen Aufgabe an die mindestens eine zweite externe Vorrichtung, wenn nicht innerhalb einer vorgegebenen Zeit ausgewählt wird, ob die vorgegebene Aufgabe auszuführen ist.

12. Verfahren nach Anspruch 9, ferner umfassend: Entfernen einer ausgewählten Vorrichtung aus dem Chatfenster nach dem Empfangen einer Anweisung, eine der mindestens einen zweiten externen Vorrichtung auszuwählen, die im Chatfenster angezeigt wird.

13. Verfahren nach Anspruch 9, ferner umfassend: Anzeigen einer dritten externen Vorrichtung, die nicht im Chatfenster angezeigt wird, auf dem Chatfenster, als Reaktion auf eine Anweisung, die dritte externe Vorrichtung dem Chatfenster hinzuzufügen.

14. Fernsteuerungssystem, umfassend:
Erste externe Vorrichtung, die dafür ausgelegt ist, ein Vorfallsignal für ein vorgegebenes Ereignis an eine Endgerätevorrichtung zu übertragen;
wobei die Endgerätevorrichtung dafür ausgelegt ist, sich mit mindestens einer zweiten externen Vorrichtung mit Bezug auf das vorgegebene Ereignis zu verbinden, wenn sie das Vorfallsignal für das vorgegebene Ereignis empfängt; und
Mindestens eine zweite externe Vorrichtung, die dafür ausgelegt ist, eine Nachricht, in der gefragt wird, ob eine vorgegebene Aufgabe entsprechend dem vorgegebenen Ereignis ausgeführt werden soll, an die Endgerätevorrichtung zu übertragen,
wobei die Endgerätevorrichtung dafür ausgelegt ist, ein Chatfenster zu erzeugen, um die verbundene mindestens eine zweite externe Vorrichtung und die empfangene Nachricht in dem erzeugten Chatfenster anzuzeigen,
wobei die Endgerätevorrichtung dafür ausgelegt ist, die mindestens eine zweite externe Vorrichtung basierend auf einer Zeit oder einem Abstand mit Bezug auf die vorgegebene Aufgabe zu gruppieren und die gruppierte mindestens eine zweite externe Vorrichtung im Chatfenster anzuzeigen, wenn das vorgegebene Ereignis eintritt und eine Bedingung hinsichtlich der Zeit oder des Abstands mit Bezug auf die vorgegebene Aufgabe erfüllt.

## Revendications

1. Dispositif terminal (100), comprenant :
un communicateur (110) configuré pour communiquer avec une pluralité de dispositifs externes ;
un dispositif d'affichage (120) configuré pour générer et afficher une fenêtre de discussion lors de la réception d'un signal d'occurrence pour un événement prédéterminé provenant d'un premier dispositif externe parmi la pluralité de dispositifs externes ; et
un processeur (130) configuré pour commander le communicateur (110) de façon à ce qu'il se connecte à au moins un second dispositif externe lié à l'événement prédéterminé,
dans lequel le processeur (130) est en outre configuré pour commander l'affichage (120) afin d'afficher :
le ou les seconds dispositifs externes dans la fenêtre de discussion ;
un message demandant s'il faut exécuter un travail prédéterminé correspondant à l'événement prédéterminé ;
et une interface graphique de l'utilisateur (GUI - graphic user interface) pour choisir de réaliser ou non le travail prédéterminé,
dans lequel le processeur (130) est en outre configuré pour regrouper le ou les seconds dispositifs externes en fonction d'un instant auquel est effectué le travail prédéterminé correspondant à l'événement prédéterminé ou d'une distance entre le dispositif terminal et le ou les seconds dispositifs externes, et pour commander l'affichage (120) afin d'afficher le ou les seconds dispositifs externes regroupés dans la fenêtre de discussion lorsque l'événement prédéterminé se produit et remplit une condition qui concerne le temps ou la distance.

2. Dispositif terminal selon la revendication 1, dans lequel le processeur (130) est en outre configuré pour commander le communicateur (110) afin de recevoir le message demandant s'il faut exécuter le travail prédéterminé correspondant à l'événement prédéterminé en provenance du ou des seconds dispositifs externes.

3. Dispositif terminal selon la revendication 1, dans lequel le processeur (130) est en outre configuré pour commander au communicateur (110) de transmettre automatiquement au ou aux seconds dispositifs externes une instruction afin d'exécuter le travail prédéterminé lorsque le travail prédéterminé à effectuer n'est pas sélectionné dans un délai prédéterminé.

4. Dispositif terminal selon la revendication 1, dans lequel le processeur (130) est en outre configuré pour supprimer un dispositif sélectionné de la fenêtre de discussion à la réception d'une instruction de sélection de l'un parmi le ou les seconds dispositifs externes affichés dans la fenêtre de discussion.

5. Dispositif terminal selon la revendication 1, dans lequel le processeur (130) est en outre configuré pour afficher un troisième dispositif externe dans la fenêtre de discussion en réponse à une instruction pour ajouter à la fenêtre de discussion le troisième dispositif externe non affiché dans la fenêtre de discussion.

6. Dispositif terminal selon la revendication 5, dans lequel le dispositif d'affichage (120) est en outre configuré pour afficher un message demandant s'il faut effectuer au moins un travail parmi un travail en relation avec l'événement prédéterminé survenu ou un travail principal prédéterminé du troisième dispositif externe dans la fenêtre de discussion.

7. Dispositif terminal selon la revendication 1, comprenant en outre :
une mémoire (150), configurée pour stocker l'événement prédéterminé et un profil d'événement dans lequel le ou les seconds dispositifs externes associés à l'événement prédéterminé sont définis.

8. Dispositif terminal selon la revendication 1, dans lequel le ou les seconds dispositifs externes sont constitués par un dispositif enregistré dans un même compte d'utilisateur.

9. Procédé de contrôle d'un dispositif terminal, le procédé comprenant les étapes consistant à :
recevoir un signal d'occurrence d'un événement prédéterminé provenant d'un premier dispositif externe parmi une pluralité de dispositifs externes (S1710) ; générer une fenêtre de discussion (S1720) ;
afficher la fenêtre de discussion générée et afficher au moins un second dispositif externe associé à l'événement prédéterminé dans la fenêtre de discussion (S1730) ; et
afficher dans la fenêtre de discussion un message demandant s'il faut exécuter un travail prédéterminé correspondant à l'événement prédéterminé et une interface graphique de l'utilisateur (GUI) pour choisir de réaliser ou non le travail prédéterminé (S1740),
comprenant en outre l'étape consistant à regrouper le ou les seconds dispositifs externes en fonction d'un instant auquel le travail prédéterminé est effectué correspondant à l'événement prédéterminé ou d'une distance entre le dispositif terminal et le ou les seconds dispositifs externes, et commander le dispositif d'affichage afin d'afficher le ou les seconds dispositifs externes regroupés dans la fenêtre de discussion lorsque l'événement prédéterminé se produit et remplit une condition qui concerne le temps ou la distance.

10. Procédé selon la revendication 9, comprenant en outre les étapes consistant à :
connecter le dispositif terminal au ou aux seconds dispositifs externes liés à l'événement prédéterminé ; et
recevoir le message demandant s'il faut exécuter le travail prédéterminé correspondant à l'événement prédéterminé à partir du ou des seconds dispositifs externes.

11. Procédé selon la revendication 9, comprenant en outre l'étape consistant à : transmettre automatiquement une instruction afin d'exécuter le travail prédéterminé au ou aux seconds dispositifs externes lorsque le travail prédéterminé à effectuer n'est pas sélectionné dans un délai prédéterminé.

12. Procédé selon la revendication 9, comprenant en outre l'étape consistant à : supprimer un dispositif sélectionné de la fenêtre de discussion à la réception d'une instruction de sélection de l'un parmi le ou les seconds dispositifs externes affichés dans la fenêtre de discussion.

13. Procédé selon la revendication 9, comprenant en outre l'étape consistant à : afficher dans la fenêtre de discussion un troisième dispositif externe non affiché dans la fenêtre de discussion en réponse à une instruction pour ajouter le troisième dispositif externe à la fenêtre de discussion.

14. Système de commande à distance comprenant :
un premier dispositif externe configuré pour transmettre un signal d'occurrence pour un événement prédéterminé à un dispositif terminal ;
le dispositif terminal configuré pour se connecter à au moins un second dispositif externe associé à l'événement prédéterminé lors de la réception du signal d'occurrence pour l'événement prédéterminé ; et
au moins un second dispositif externe configuré pour transmettre au dispositif terminal un message demandant s'il faut exécuter un travail prédéterminé correspondant à l'événement prédéterminé,
dans lequel le dispositif terminal est configuré pour générer une fenêtre de discussion pour afficher le ou les seconds dispositifs externes connectés et le message reçu dans la fenêtre de discussion générée,
dans lequel le dispositif terminal est configuré pour regrouper le ou les seconds dispositifs externes en fonction d'un temps ou d'une distance liés au travail prédéterminé qui est effectué et afficher le ou les seconds dispositifs externes regroupés dans la fenêtre de discussion lorsque l'événement prédéterminé se produit et remplit une condition qui concerne le temps ou la distance liés au travail prédéterminé.
